# EUROPEAN PATENT SPECIFICATION

(11) **EP 3 191 957 B1**
(45) Date of publication and mention of the grant of the patent: **18.07.2018**
(21) Application number: 15771801.6
(22) Date of filing: 08.09.2015
(51) Int. Cl.: G06F 17/30, G06F 11/14

(54) **LOW-OVERHEAD RESTARTABLE MERGE OPERATION WITH EFFICIENT CRASH RECOVERY**
MIT GERINGEM OVERHEAD NEUSTARTBARE SORTIER-MISCH-OPERATION MIT EFFIZIENTER ABSTURZ-WIEDERGEWINNUNG
OPERATION DE TRI REDEMARRABLE A FAIBLE COÛT MUNIE D'UN RECOUVREMENT DE CRASH EFFICACE

(30) Priority: 10.09.2014 US 201414483012
(43) Date of publication of application: 19.07.2017
(73) Proprietor: NetApp, Inc., Sunnyvale, CA 94089 (US)
(72) Inventor: D'SA, Janice, Seattle, WA 98121 (US); PUNDIR, Anshul, Mountain View, CA 94041 (US); KRISHNAMACHARI, Srinath, Sunnyvale, CA 94087 (US); ZHENG, Ling, Saratoga, CA 95070 (US)
(74) Representative: D Young & Co LLP
(86) International application number: PCT/US2015/048810
(87) International publication number: WO 2016/040236

(56) References cited:
- WO-A1-2010/033962
- US-A1- 2004 030 703
- US-B1- 8 806 115

## Description

### BACKGROUND

### Technical Field

The present disclosure relates to storage systems and, more specifically, to restart of a merge operation without logging of state information relating to progress of the merge operation in storage systems configured to provide a distributed storage architecture of a cluster.

### Background Information

A plurality of storage systems may be interconnected as a cluster and configured to provide storage service relating to the organization of storage containers stored on storage devices coupled to the systems. The storage system cluster may be further configured to operate according to a client/server model of information delivery to thereby allow one or more clients (hosts) to access the storage containers. The storage devices may be embodied as solid-state drives (SSDs), such as flash storage devices, whereas the storage containers may be embodied as files or logical units (LUNs). Each storage container may be implemented as a set of data structures, such as data blocks that store data for the storage container and metadata blocks that describe the data of the storage container. For example, the metadata may describe, e.g., identify, locations of the data throughout the cluster.

The metadata may be organized and processed as entries of one or more data structures, wherein processing of the metadata involves execution of operations that modify the data structure entries. Modifications to the metadata of the data structures may result in deletion of existing entries and generation of new entries of the data structures, which may cause write amplification and wear of flash devices in the SSDs. Thus, it is desirable that the modifications to the metadata occur efficiently, i.e., without the need to maintain substantial state information relating to the progress of such modifications, particularly in the event of a crash and subsequent recovery of the metadata.

US 8806115 discloses a parallel (e.g. tiered) logging technique to deliver low latency acknowledgements of input/output (I/O) requests, such as write requests, while avoiding loss of data. Write data may be stored (copied) as a log in a portion of a dynamic random access memory and a non-volatile random access memory (NVRAM). The NVRAM may be configured as, e.g., a persistent write-back cache of the node, while parameters of the request may be stored in another portion of the NVRAM configured as the log (NVLog). The write data may be organized into separate variable length blocks or extents and "written back" out-of-order from the write-back cache to storage devices, such as SSDs, e.g., organized into a data container (intended destination of the write request). The write data may be preserved in the NVlog until each extent is safely stored on SSD.

The document also discloses the feature of an extent store layer that may be responsible for performing de-duplication and compression on the extents prior to storage.

### Summary

The invention is defined in the appended independent claims 1 and 11.

Dependent claims relate to preferred embodiments of the present invention.

### BRIEF DESCRIPTION OF THE DRAWINGS

The above and further advantages of the embodiments herein may be better understood by referring to the following description in conjunction with the accompanying drawings in which like reference numerals indicate identically or functionally similar elements, of which:
Fig. 1 is a block diagram of a plurality of nodes interconnected as a cluster;
Fig. 2 is a block diagram of a node;
Fig. 3 is a block diagram of a storage input/output (I/O) stack of the node;
Fig. 4 illustrates a write path of the storage I/O stack;
Fig. 5 illustrates a read path of the storage I/O stack;
Fig. 6 is a block diagram of various volume metadata entries;
Fig. 7 is a block diagram of a dense tree metadata structure;
Fig. 8 is a block diagram of a top level of the dense tree metadata structure;
Fig. 9 illustrates mapping between levels of the dense tree metadata structure;
Fig. 10 illustrates a workflow for inserting a volume metadata entry into the dense tree metadata structure in accordance with a write request;
Fig. 11 illustrates merging between levels of the dense tree metadata structure;
Fig. 12 illustrates batch updating between levels of the dense tree metadata structure;
Fig. 13 is an example simplified procedure for merging between levels of the dense tree metadata structure;
Fig. 14 illustrates volume logging of the dense tree metadata structure;
Fig. 15 illustrates a low-overhead merge technique;
Figs. 16a-c illustrate merge, crash and restart using the low-overhead merge technique; and
Fig. 17 is a block diagram of a metadata page uniqifier.

### OVERVIEW

The embodiments described herein are directed to a low-overhead merge technique that enables restart of a merge operation with minimal logging of state information relating to progress of the merge operation by a volume layer of a storage input/output (I/O) stack executing on one or more nodes of a cluster. The technique enables restart of the merge operation by ensuring that metadata generated during the merge operation is unique and, thus, is not subject to de-duplication. The metadata is illustratively volume metadata embodied as mappings from logical block addresses (LBAs) of a logical unit (LUN) accessible by a host to durable extent keys maintained by an extent store layer of the storage I/O stack. Each extent key is a unique cluster-wide identifier associated with a storage location for a variable length block of data or extent. The volume metadata is illustratively organized as a multi-level dense tree metadata structure, wherein each level of the dense tree metadata structure (dense tree) includes volume metadata entries for storing the volume metadata. The LUN may be apportioned into multiple volumes, each of which may be partitioned into multiple regions (e.g., allotted as disjoint offset ranges), wherein each region is represented by a dense tree.

The volume layer may organize the volume metadata entries as metadata pages, i.e., extents, for storage in an extent store maintained by the extent store layer. As used herein, the extent store may be viewed as a global pool of extents stored on storage arrays of the cluster. The extent store layer may be configured to de-duplicate extents having identical (user) data. When a level of the dense tree is full, the volume metadata entries of the level are merged with the next lower level of the dense tree in accordance with the merge operation. Illustratively, the low-overhead merge technique ensures that the merge operation is restartable after a crash (i.e., an unexpected interruption or shutdown). As such, the volume metadata generated during the merge operation is not subject to de-duplication because metadata pages generated during a restart of the merge operation may be identical to existing metadata pages generated during the (interrupted) merge operation.

Accordingly, the technique avoids de-duplication by (1) providing a unique value in each metadata page that distinguishes the page, i.e., renders the page distinct or "unique", from other metadata pages in the extent store; and (2) preventing de-duplication of identical metadata pages, other than during restart of a merge operation. The unique value is illustratively embodied as a multi-component uniqifier contained in a header of each metadata page and configured to render the page unique across all levels of a dense tree (region), across all regions and across all volumes in the volume layer. The extent store layer may thus be configured to safely ignore possible metadata page duplicates by not incrementing the reference count for a metadata page even if, during the restart merge operation, the metadata page is identical to (and thus subject to deduplication of) an existing metadata page in the extent store. In addition, the technique ensures that a reference count on each metadata page is a sentinel value denoting a lack of de-duplication, e.g., the number "1".

### DESCRIPTION

### Storage Cluster

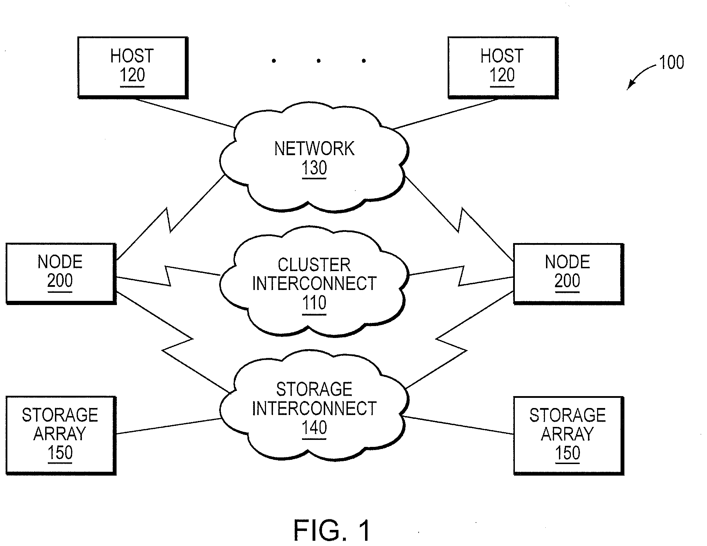

Fig. 1 is a block diagram of a plurality of nodes 200 interconnected as a cluster 100 and configured to provide storage service relating to the organization of information on storage devices. The nodes 200 may be interconnected by a cluster interconnect fabric 110 and include functional components that cooperate to provide a distributed storage architecture of the cluster 100, which may be deployed in a storage area network (SAN). As described herein, the components of each node 200 include hardware and software functionality that enable the node to connect to one or more hosts 120 over a computer network 130, as well as to one or more storage arrays 150 of storage devices over a storage interconnect 140, to thereby render the storage service in accordance with the distributed storage architecture.

Each host 120 may be embodied as a general-purpose computer configured to interact with any node 200 in accordance with a client/server model of information delivery. That is, the client (host) may request the services of the node, and the node may return the results of the services requested by the host, by exchanging packets over the network 130. The host may issue packets including file-based access protocols, such as the Network File System (NFS) protocol over the Transmission Control Protocol/Internet Protocol (TCP/IP), when accessing information on the node in the form of storage containers such as files and directories. However, in an embodiment, the host 120 illustratively issues packets including block-based access protocols, such as the Small Computer Systems Interface (SCSI) protocol encapsulated over TCP (iSCSI) and SCSI encapsulated over FC (FCP), when accessing information in the form of storage containers such as logical units (LUNs). Notably, any of the nodes 200 may service a request directed to a storage container on the cluster 100.

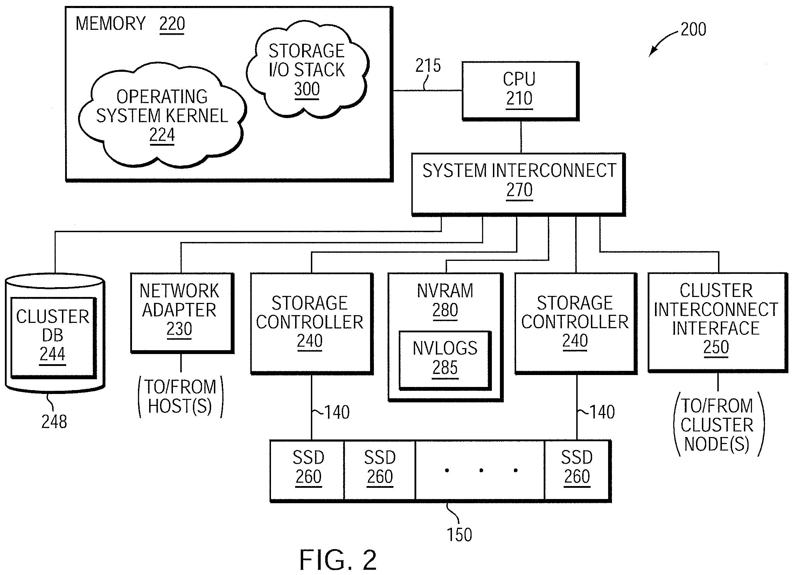

Fig. 2 is a block diagram of a node 200 that is illustratively embodied as a storage system having one or more central processing units (CPUs) 210 coupled to a memory 220 via a memory bus 215. The CPU 210 is also coupled to a network adapter 230, one or more storage controllers 240, a cluster interconnect interface 250 and a non-volatile random access memory (NVRAM 280) via a system interconnect 270. The network adapter 230 may include one or more ports adapted to couple the node 200 to the host(s) 120 over computer network 130, which may include point-to-point links, wide area networks, virtual private networks implemented over a public network (Internet) or a local area network. The network adapter 230 thus includes the mechanical, electrical and signaling circuitry needed to connect the node to the network 130, which illustratively embodies an Ethernet or Fibre Channel (FC) network.

The memory 220 may include memory locations that are addressable by the CPU 210 for storing software programs and data structures associated with the embodiments described herein. The CPU 210 may, in turn, include processing elements and/or logic circuitry configured to execute the software programs, such as a storage input/output (I/O) stack 300, and manipulate the data structures. Illustratively, the storage I/O stack 300 may be implemented as a set of user mode processes that may be decomposed into a plurality of threads. An operating system kernel 224, portions of which are typically resident in memory 220 (in-core) and executed by the processing elements (i.e., CPU 210), functionally organizes the node by, *inter alia,* invoking operations in support of the storage service implemented by the node and, in particular, the storage I/O stack 300. A suitable operating system kernel 224 may include a general-purpose operating system, such as the UNIX® series or Microsoft Windows® series of operating systems, or an operating system with configurable functionality such as microkernels and embedded kernels. However, in an embodiment described herein, the operating system kernel is illustratively the Linux® operating system. It will be apparent to those skilled in the art that other processing and memory means, including various computer readable media, may be used to store and execute program instructions pertaining to the embodiments herein.

Each storage controller 240 cooperates with the storage I/O stack 300 executing on the node 200 to access information requested by the host 120. The information is preferably stored on storage devices such as solid state drives (SSDs) 260, illustratively embodied as flash storage devices, of storage array 150. In an embodiment, the flash storage devices may be based on NAND flash components, e.g., single-layer-cell (SLC) flash, multi-layer-cell (MLC) flash or triple-layer-cell (TLC) flash, although it will be understood to those skilled in the art that other block-oriented, non-volatile, solid-state electronic devices (e.g., drives based on storage class memory components) may be advantageously used with the embodiments described herein. Accordingly, the storage devices may or may not be block-oriented (i.e., accessed as blocks). The storage controller 240 includes one or more ports having I/O interface circuitry that couples to the SSDs 260 over the storage interconnect 140, illustratively embodied as a serial attached SCSI (SAS) topology. Alternatively, other point-to-point I/O interconnect arrangements such as a conventional serial ATA (SATA) topology or a PCI topology, may be used. The system interconnect 270 may also couple the node 200 to a local service storage device 248, such as an SSD, configured to locally store cluster-related configuration information, e.g., as cluster database (DB) 244, which may be replicated to the other nodes 200 in the cluster 100.

The cluster interconnect interface 250 may include one or more ports adapted to couple the node 200 to the other node(s) of the cluster 100. In an embodiment, Ethernet may be used as the clustering protocol and interconnect fabric media, although it will be apparent to those skilled in the art that other types of protocols and interconnects, such as Infiniband, may be utilized within the embodiments described herein. The NVRAM 280 may include a back-up battery or other built-in last-state retention capability (e.g., non-volatile semiconductor memory such as storage class memory) that is capable of maintaining data in light of a failure to the node and cluster environment. Illustratively, a portion of the NVRAM 280 may be configured as one or more non-volatile logs (NVLogs 285) configured to temporarily record ("log") I/O requests, such as write requests, received from the host 120.

### Storage I/O Stack

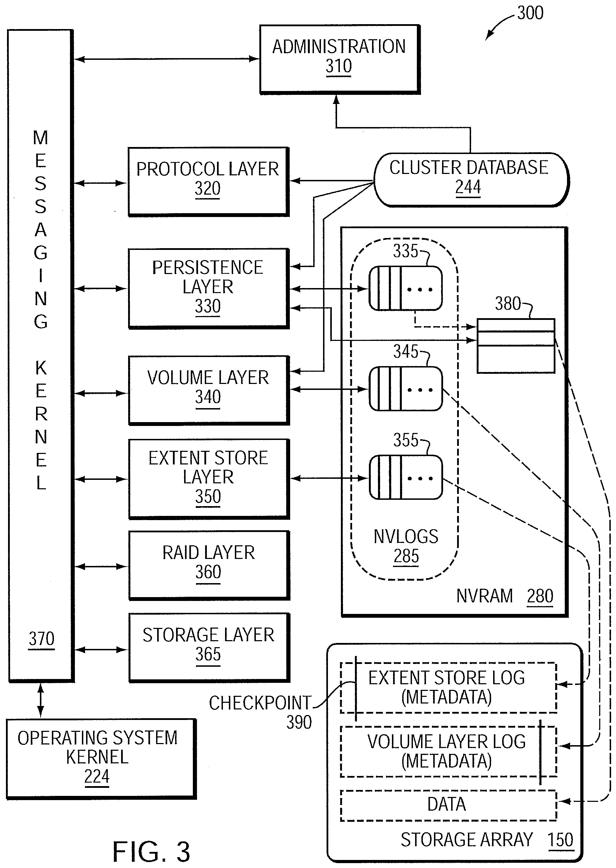

Fig. 3 is a block diagram of the storage I/O stack 300 that may be advantageously used with one or more embodiments described herein. The storage I/O stack 300 includes a plurality of software modules or layers that cooperate with other functional components of the nodes 200 to provide the distributed storage architecture of the cluster 100. In an embodiment, the distributed storage architecture presents an abstraction of a single storage container, i.e., all of the storage arrays 150 of the nodes 200 for the entire cluster 100 organized as one large pool of storage. In other words, the architecture consolidates storage, i.e., the SSDs 260 of the arrays 150, throughout the cluster (retrievable via cluster-wide keys) to enable storage of the LUNs. Both storage capacity and performance may then be subsequently scaled by adding nodes 200 to the cluster 100.

Illustratively, the storage I/O stack 300 includes an administration layer 310, a protocol layer 320, a persistence layer 330, a volume layer 340, an extent store layer 350, a Redundant Array of Independent Disks (RAID) layer 360, a storage layer 365 and a NVRAM (storing NVLogs) "layer" interconnected with a messaging kernel 370. The messaging kernel 370 may provide a message-based (or event-based) scheduling model (e.g., asynchronous scheduling) that employs messages as fundamental units of work exchanged (i.e., passed) among the layers. Suitable message-passing mechanisms provided by the messaging kernel to transfer information between the layers of the storage I/O stack 300 may include, e.g., for intra-node communication: i) messages that execute on a pool of threads, ii) messages that execute on a single thread progressing as an operation through the storage I/O stack, iii) messages using an Inter Process Communication (IPC) mechanism and, e.g., for inter-node communication: messages using a Remote Procedure Call (RPC) mechanism in accordance with a function shipping implementation. Alternatively, the I/O stack may be implemented using a thread-based or stack-based execution model. In one or more embodiments, the messaging kernel 370 allocates processing resources from the operating system kernel 224 to execute the messages. Each storage I/O stack layer may be implemented as one or more instances (i.e., processes) executing one or more threads (e.g., in kernel or user space) that process the messages passed between the layers such that the messages provide synchronization for blocking and non-blocking operation of the layers.

In an embodiment, the protocol layer 320 may communicate with the host 120 over the network 130 by exchanging discrete frames or packets configured as I/O requests according to pre-defined protocols, such as iSCSI and FCP. An I/O request, e.g., a read or write request, may be directed to a LUN and may include I/O parameters such as, *inter alia,* a LUN identifier (ID), a logical block address (LBA) of the LUN, a length (i.e., amount of data) and, in the case of a write request, write data. The protocol layer 320 receives the I/O request and forwards it to the persistence layer 330, which records the request into a persistent write-back cache 380, illustratively embodied as a log whose contents can be replaced randomly, e.g., under some random access replacement policy rather than only in serial fashion, and returns an acknowledgement to the host 120 via the protocol layer 320. In an embodiment only I/O requests that modify the LUN, e.g., write requests, are logged. Notably, the I/O request may be logged at the node receiving the I/O request, or in an alternative embodiment in accordance with the function shipping implementation, the I/O request may be logged at another node.

Illustratively, dedicated logs may be maintained by the various layers of the storage I/O stack 300. For example, a dedicated log 335 may be maintained by the persistence layer 330 to record the I/O parameters of an I/O request as equivalent internal, i.e., storage I/O stack, parameters, e.g., volume ID, offset, and length. In the case of a write request, the persistence layer 330 may also cooperate with the NVRAM 280 to implement the write-back cache 380 configured to store the write data associated with the write request. In an embodiment, the write-back cache 380 may be structured as a log. Notably, the write data for the write request may be physically stored in the cache 380 such that the log 335 contains the reference to the associated write data. It will be understood to persons skilled in the art the other variations of data structures may be used to store or maintain the write data in NVRAM including data structures with no logs. In an embodiment, a copy of the write-back cache may also be maintained in the memory 220 to facilitate direct memory access to the storage controllers. In other embodiments, caching may be performed at the host 120 or at a receiving node in accordance with a protocol that maintains coherency between the data stored at the cache and the cluster.

In an embodiment, the administration layer 310 may apportion the LUN into multiple volumes, each of which may be partitioned into multiple regions (e.g., allotted as disjoint block address ranges), with each region having one or more segments stored as multiple stripes on the array 150. A plurality of volumes distributed among the nodes 200 may thus service a single LUN, i.e., each volume within the LUN services a different LBA range (i.e., offset range) or set of ranges within the LUN. Accordingly, the protocol layer 320 may implement a volume mapping technique to identify a volume to which the I/O request is directed (i.e., the volume servicing the offset range indicated by the parameters of the I/O request). Illustratively, the cluster database 244 may be configured to maintain one or more associations (e.g., key-value pairs) for each of the multiple volumes, e.g., an association between the LUN ID and a volume, as well as an association between the volume and a node ID for a node managing the volume. The administration layer 310 may also cooperate with the database 244 to create (or delete) one or more volumes associated with the LUN (e.g., creating a volume ID/LUN key-value pair in the database 244). Using the LUN ID and LBA (or LBA range), the volume mapping technique may provide a volume ID (e.g., using appropriate associations in the cluster database 244) that identifies the volume and node servicing the volume destined for the request, as well as translate the LBA (or LBA range) into an offset and length within the volume. Specifically, the volume ID is used to determine a volume layer instance that manages volume metadata associated with the LBA or LBA range. As noted, the protocol layer 320 may pass the I/O request (i.e., volume ID, offset and length) to the persistence layer 330, which may use the function shipping (e.g., inter-node) implementation to forward the I/O request to the appropriate volume layer instance executing on a node in the cluster based on the volume ID.

In an embodiment, the volume layer 340 may manage the volume metadata by, e.g., maintaining states of host-visible containers, such as ranges of LUNs, and performing data management functions, such as creation of snapshots and clones, for the LUNs in cooperation with the administration layer 310. The volume metadata is illustratively embodied as in-core mappings from LUN addresses (i.e., LBAs) to durable extent keys, which are unique cluster-wide IDs associated with SSD storage locations for extents within an extent key space of the cluster-wide storage container. That is, an extent key may be used to retrieve the data of the extent at an SSD storage location associated with the extent key. Alternatively, there may be multiple storage containers in the cluster wherein each container has its own extent key space, e.g., where the administration layer 310 provides distribution of extents among the storage containers. An extent is a variable length block of data that provides a unit of storage on the SSDs and that need not be aligned on any specific boundary, i.e., it may be byte aligned. Accordingly, an extent may be an aggregation of write data from a plurality of write requests to maintain such alignment. Illustratively, the volume layer 340 may record the forwarded request (e.g., information or parameters characterizing the request), as well as changes to the volume metadata, in dedicated log 345 maintained by the volume layer 340. Subsequently, the contents of the volume layer log 345 may be written to the storage array 150 in accordance with a checkpoint (e.g., synchronization) operation that stores in-core metadata on the array 150. That is, the checkpoint operation (checkpoint) ensures that a consistent state of metadata, as processed in-core, is committed to (i.e., stored on) the storage array 150; whereas the retirement of log entries ensures that the entries accumulated in the volume layer log 345 synchronize with the metadata checkpoints committed to the storage array 150 by, e.g., retiring those accumulated log entries that are prior to the checkpoint. In one or more embodiments, the checkpoint and retirement of log entries may be data driven, periodic or both.

In an embodiment, the extent store layer 350 is responsible for storing extents prior to storage on the SSDs 260 (i.e., on the storage array 150) and for providing the extent keys to the volume layer 340 (e.g., in response to a forwarded write request). The extent store layer 350 is also responsible for retrieving data (e.g., an existing extent) using an extent key (e.g., in response to a forwarded read request). The extent store layer 350 may be responsible for performing de-duplication and compression on the extents prior to storage. The extent store layer 350 may maintain in-core mappings (e.g., embodied as hash tables) of extent keys to SSD storage locations (e.g., offset on an SSD 260 of array 150). The extent store layer 350 may also maintain a dedicated log 355 of entries that accumulate requested "put" and "delete" operations (i.e., write requests and delete requests for extents issued from other layers to the extent store layer 350), where these operations change the in-core mappings (i.e., hash table entries). Subsequently, the in-core mappings and contents of the extent store layer log 355 may be written to the storage array 150 in accordance with a "fuzzy" checkpoint 390 (i.e., checkpoint with incremental changes recorded in one or more log files) in which selected in-core mappings, less than the total, are committed to the array 150 at various intervals (e.g., driven by an amount of change to the in-core mappings, size thresholds of log 355, or periodically). Notably, the accumulated entries in log 355 may be retired once all in-core mappings have been committed to include the changes recorded in those entries prior to the first interval.

In an embodiment, the RAID layer 360 may organize the SSDs 260 within the storage array 150 as one or more RAID groups (e.g., sets of SSDs) that enhance the reliability and integrity of extent storage on the array by writing data "stripes" having redundant information, i.e., appropriate parity information with respect to the striped data, across a given number of SSDs 260 of each RAID group. The RAID layer 360 may also store a number of stripes (e.g., stripes of sufficient depth) at once, e.g., in accordance with a plurality of contiguous write operations, so as to reduce data relocation (i.e., internal flash block management) that may occur within the SSDs as a result of the operations. In an embodiment, the storage layer 365 implements storage I/O drivers that may communicate directly with hardware (e.g., the storage controllers and cluster interface) cooperating with the operating system kernel 224, such as a Linux virtual function I/O (VFIO) driver.

### Write Path

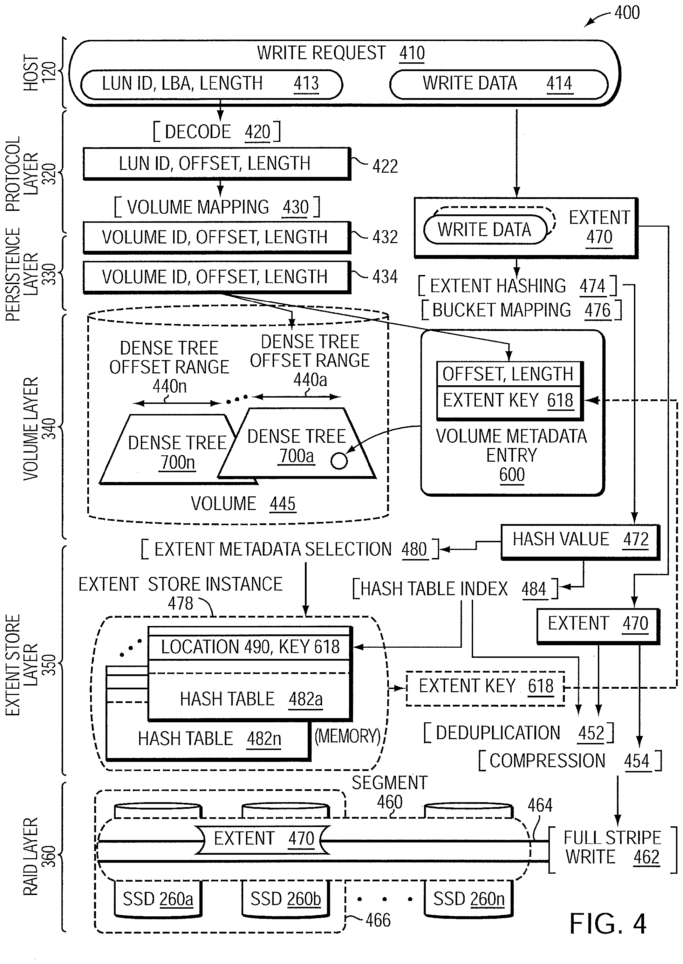

Fig. 4 illustrates an I/O (e.g., write) path 400 of the storage I/O stack 300 for processing an I/O request, e.g., a SCSI write request 410. The write request 410 may be issued by host 120 and directed to a LUN stored on the storage array 150 of the cluster 100. Illustratively, the protocol layer 320 receives and processes the write request by decoding 420 (e.g., parsing and extracting) fields of the request, e.g., LUN ID, LBA and length (shown at 413), as well as write data 414. The protocol layer may use the results 422 from decoding 420 for a volume mapping technique 430 (described above) that translates the LUN ID and LBA range (i.e., equivalent offset and length) of the write request to an appropriate volume layer instance, i.e., volume ID (volume 445), in the cluster 100 that is responsible for managing volume metadata for the LBA range. In an alternative embodiment, the persistence layer 330 may implement the above described volume mapping technique 430. The protocol layer then passes the results 432, e.g., volume ID, offset, length (as well as write data), to the persistence layer 330, which records the request in the persistent layer log 335 and returns an acknowledgement to the host 120 via the protocol layer 320. The persistence layer 330 may aggregate and organize write data 414 from one or more write requests into a new extent 470 and perform a hash computation, i.e., a hash function, on the new extent to generate a hash value 472 in accordance with an extent hashing technique 474.

The persistent layer 330 may then pass the write request with aggregated write date including, e.g., the volume ID, offset and length, as parameters 434 of a message to the appropriate volume layer instance. In an embodiment, message passing of the parameters 434 (received by the persistent layer) may be redirected to another node via the function shipping mechanism, .e.g., RPC, for inter-node communication. Alternatively, message passing of parameters 434 may be via the IPC mechanism, e.g., message threads, for intra-node communication.

In one or more embodiments, a bucket mapping technique 476 is provided that translates the hash value 472 to an instance of an appropriate extent store layer (e.g., extent store instance 478) that is responsible for storing the new extent 470. Note that the bucket mapping technique may be implemented in any layer of the storage I/O stack above the extent store layer. In an embodiment, for example, the bucket mapping technique may be implemented in the persistence layer 330, the volume layer 340, or a layer that manages cluster-wide information, such as a cluster layer (not shown). Accordingly, the persistence layer 330, the volume layer 340, or the cluster layer may contain computer executable instructions executed by the CPU 210 to perform operations that implement the bucket mapping technique 476. The persistence layer 330 may then pass the hash value 472 and the new extent 470 to the appropriate volume layer instance and onto the appropriate extent store instance via an extent store put operation. The extent hashing technique 474 may embody an approximately uniform hash function to ensure that any random extent to be written may have an approximately equal chance of falling into any extent store instance 478, i.e., hash buckets are distributed across extent store instances of the cluster 100 based on available resources. As a result, the bucket mapping technique 476 provides load-balancing of write operations (and, by symmetry, read operations) across nodes 200 of the cluster, while also leveling flash wear in the SSDs 260 of the cluster.

In response to the put operation, the extent store instance may process the hash value 472 to perform an extent metadata selection technique 480 that (i) selects an appropriate hash table 482 (e.g., hash table 482a) from a set of hash tables (illustratively in-core) within the extent store instance 478, and (ii) extracts a hash table index 484 from the hash value 472 to index into the selected hash table and lookup a table entry having an extent key 618 identifying a storage location 490 on SSD 260 for the extent. Accordingly, the extent store layer 350 contains computer executable instructions executed by the CPU 210 to perform operations that implement the extent metadata selection technique 480 described herein. If a table entry with a matching extent key is found, then the SSD location 490 mapped from the extent key 618 is used to retrieve an existing extent (not shown) from SSD. The existing extent is then compared with the new extent 470 to determine whether their data is identical. If the data is identical, the new extent 470 is already stored on SSD 260 and a de-duplication opportunity (denoted de-duplication 452) exists such that there is no need to write another copy of the data. Accordingly, a reference count (not shown) in the table entry for the existing extent is incremented and the extent key 618 of the existing extent is passed to the appropriate volume layer instance for storage within an entry (denoted as volume metadata entry 600) of a dense tree metadata structure (e.g., dense tree 700a), such that the extent key 618 is associated an offset range 440 (e.g., offset range 440a) of the volume 445.

However, if the data of the existing extent is not identical to the data of the new extent 470, a collision occurs and a deterministic algorithm is invoked to sequentially generate as many new candidate extent keys (not shown) mapping to the same bucket as needed to either provide de-duplication 452 or produce an extent key that is not already stored within the extent store instance. Notably, another hash table (e.g. hash table 482n) may be selected by a new candidate extent key in accordance with the extent metadata selection technique 480. In the event that no de-duplication opportunity exists (i.e., the extent is not already stored) the new extent 470 is compressed in accordance with compression technique 454 and passed to the RAID layer 360, which processes the new extent 470 for storage on SSD 260 within one or more stripes 464 of RAID group 466. The extent store instance may cooperate with the RAID layer 360 to identify a storage segment 460 (i.e., a portion of the storage array 150) and a location on SSD 260 within the segment 460 in which to store the new extent 470. Illustratively, the identified storage segment is a segment with a large contiguous free space having, e.g., location 490 on SSD 260b for storing the extent 470.

In an embodiment, the RAID layer 360 then writes the stripe 464 across the RAID group 466, illustratively as one or more full stripe writes 462. The RAID layer 360 may write a series of stripes 464 of sufficient depth to reduce data relocation that may occur within the flash-based SSDs 260 (i.e., flash block management). The extent store instance then (i) loads the SSD location 490 of the new extent 470 into the selected hash table 482n (i.e., as selected by the new candidate extent key), (ii) passes a new extent key (denoted as extent key 618) to the appropriate volume layer instance for storage within an entry (also denoted as volume metadata entry 600) of a dense tree 700 managed by that volume layer instance, and (iii) records a change to extent metadata of the selected hash table in the extent store layer log 355. Illustratively, the volume layer instance selects dense tree 700a spanning an offset range 440a of the volume 445 that encompasses the LBA range of the write request. As noted, the volume 445 (e.g., an offset space of the volume) is partitioned into multiple regions (e.g., allotted as disjoint offset ranges); in an embodiment, each region is represented by a dense tree 700. The volume layer instance then inserts the volume metadata entry 600 into the dense tree 700a and records a change corresponding to the volume metadata entry in the volume layer log 345. Accordingly, the I/O (write) request is sufficiently stored on SSD 260 of the cluster.

### Read Path

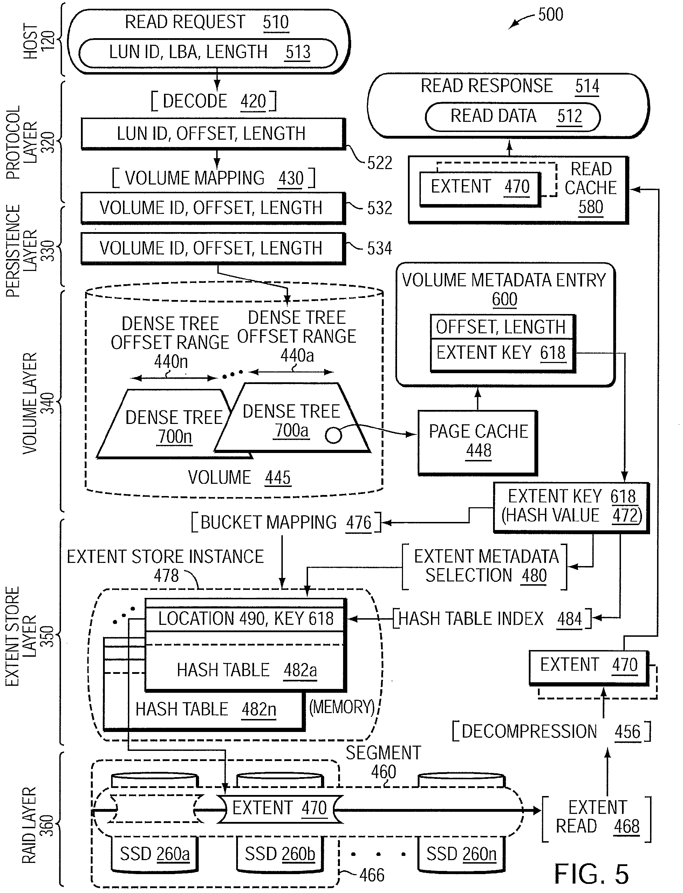

Fig. 5 illustrates an I/O (e.g., read) path 500 of the storage I/O stack 300 for processing an I/O request, e.g., a SCSI read request 510. The read request 510 may be issued by host 120 and received at the protocol layer 320 of a node 200 in the cluster 100. Illustratively, the protocol layer 320 processes the read request by decoding 420 (e.g., parsing and extracting) fields of the request, e.g., LUN ID, LBA, and length (shown at 513), and uses the results 522, e.g., LUN ID, offset, and length, for the volume mapping technique 430. That is, the protocol layer 320 may implement the volume mapping technique 430 (described above) to translate the LUN ID and LBA range (i.e., equivalent offset and length) of the read request to an appropriate volume layer instance, i.e., volume ID (volume 445), in the cluster 100 that is responsible for managing volume metadata for the LBA (i.e., offset) range. The protocol layer then passes the results 532 to the persistence layer 330, which may search the write cache 380 to determine whether some or all of the read request can be serviced from its cached data. If the entire request cannot be serviced from the cached data, the persistence layer 330 may then pass the remaining portion of the request including, e.g., the volume ID, offset and length, as parameters 534 to the appropriate volume layer instance in accordance with the function shipping mechanism (e.g., RPC for inter-node communication) or the IPC mechanism (e.g., message threads, for intra-node communication).

The volume layer instance may process the read request to access a dense tree metadata structure (e.g., dense tree 700a) associated with a region (e.g., offset range 440a) of a volume 445 that encompasses the requested offset range (specified by parameters 534). The volume layer instance may further process the read request to search for (lookup) one or more volume metadata entries 600 of the dense tree 700a to obtain one or more extent keys 618 associated with one or more extents 470 within the requested offset range. As described further herein, each dense tree 700 may be embodied as a multiple levels of a search structure with possibly overlapping offset range entries at each level. The entries, i.e., volume metadata entries 600, provide mappings from host-accessible LUN addresses, i.e., LBAs, to durable extent keys. The various levels of the dense tree may have volume metadata entries 600 for the same offset, in which case the higher level has the newer entry and is used to service the read request. A top level of the dense tree 700 is illustratively resident in-core and a page cache 448 may be used to access lower levels of the tree. If the requested range or portion thereof is not present in the top level, a metadata page associated with an index entry at the next lower tree level is accessed. The metadata page (i.e., in the page cache 448) at the next level is then searched (e.g., a binary search) to find any overlapping entries. This process is then iterated until one or more volume metadata entries 600 of a level are found to ensure that the extent key(s) 618 for the entire requested read range are found. If no metadata entries exist for the entire or portions of the requested read range, then the missing portion(s) are zero filled.

Once found, each extent key 618 is processed by the volume layer 340 to, e.g., implement the bucket mapping technique 476 that translates the extent key to an appropriate extent store instance 478 responsible for storing the requested extent 470. Note that, in an embodiment, each extent key 618 is substantially identical to hash value 472 associated with the extent 470, i.e., the hash value as calculated during the write request for the extent, such that the bucket mapping 476 and extent metadata selection 480 techniques may be used for both write and read path operations. Note also that the extent key 618 may be derived from the hash value 472. The volume layer 340 may then pass the extent key 618 (i.e., the hash value 472 from a previous write request for the extent) to the appropriate extent store instance 478 (via an extent store get operation), which performs an extent key-to-SSD mapping to determine the location on SSD 260 for the extent.

In response to the get operation, the extent store instance may process the extent key 618 (i.e., hash value 472) to perform the extent metadata selection technique 480 that (i) selects an appropriate hash table (e.g., hash table 482a) from a set of hash tables within the extent store instance 478, and (ii) extracts a hash table index 484 from the extent key 618 (i.e., hash value 472) to index into the selected hash table and lookup a table entry having a matching extent key 618 that identifies a storage location 490 on SSD 260 for the extent 470. That is, the SSD location 490 mapped to the extent key 618 may be used to retrieve the existing extent (denoted as extent 470) from SSD 260 (e.g., SSD 260b). The extent store instance then cooperates with the RAID storage layer 360 to access the extent on SSD 260b and retrieve the data contents in accordance with the read request. Illustratively, the RAID layer 360 may read the extent in accordance with an extent read operation 468 and pass the extent 470 to the extent store instance. The extent store instance may then decompress the extent 470 in accordance with a decompression technique 456, although it will be understood to those skilled in the art that decompression can be performed at any layer of the storage I/O stack 300. The extent 470 may be stored in a buffer (not shown) in memory 220 and a reference to that buffer may be passed back through the layers of the storage I/O stack. The persistence layer may then load the extent into a read cache 580 (or other staging mechanism) and may extract appropriate read data 512 from the read cache 580 for the LBA range of the read request 510. Thereafter, the protocol layer 320 may create a SCSI read response 514, including the read data 512, and return the read response to the host 120.

### Dense Tree Volume Metadata

As noted, a host-accessible LUN may be apportioned into multiple volumes, each of which may be partitioned into one or more regions, wherein each region is associated with a disjoint offset range, i.e., a LBA range, owned by an instance of the volume layer 340 executing on a node 200. For example, assuming a maximum volume size of 64 terabytes (TB) and a region size of 16 gigabytes (GB), a volume may have up to 4096 regions (i.e., 16 GB x 4096 = 64 TB). In an embodiment, region 1 may be associated with an offset range of, e.g., 0-16 GB, region 2 may be associated with an offset range of 16 GB-32 GB, and so forth. Ownership of a region denotes that the volume layer instance manages metadata, i.e., volume metadata, for the region, such that I/O requests destined to an offset range within the region are directed to the owning volume layer instance. Thus, each volume layer instance manages volume metadata for, and handles I/O requests to, one or more regions. A basis for metadata scale-out in the distributed storage architecture of the cluster 100 includes partitioning of a volume into regions and distributing of region ownership across volume layer instances of the cluster.

Volume metadata, as well as data storage, in the distributed storage architecture is illustratively extent based. The volume metadata of a region that is managed by the volume layer instance is illustratively embodied as in memory (in-core) and on SSD (on-flash) volume metadata configured to provide mappings from host-accessible LUN addresses, i.e., LBAs, of the region to durable extent keys. In other words, the volume metadata maps LBA (i.e., offset) ranges of the LUN to data of the LUN (via extent keys) within the respective LBA range. In an embodiment, the volume layer organizes the volume metadata (embodied as volume metadata entries 600) as a data structure, i.e., a dense tree metadata structure (dense tree 700), which maps an offset range within the region to one or more extent keys. That is, LUN data (user data) stored as extents (accessible via extent keys) is associated with LUN offset (i.e., LBA) ranges represented as volume metadata (also stored as extents). Accordingly, the volume layer 340 contains computer executable instructions executed by the CPU 210 to perform operations that organize and manage the volume metadata entries of the dense tree metadata structure described herein.

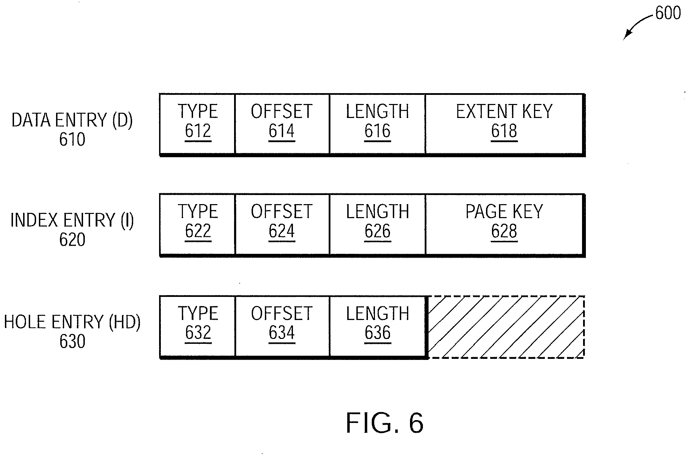

Fig. 6 is a block diagram of various volume metadata entries 600 of the dense tree metadata structure. Each volume metadata entry 600 of the dense tree 700 may be a descriptor that embodies one of a plurality of types, including a data entry (D) 610, an index entry (I) 620, and a hole entry (H) 630. The data entry (D) 610 is configured to map (offset, length) to an extent key for an extent (user data) and includes the following content: type 612, offset 614, length 616 and extent key 618. The index entry (I) 620 is configured to map (offset, length) to a page key (e.g., an extent key) of a metadata page (stored as an extent), i.e., a page containing one or more volume metadata entries, at a next lower level of the dense tree; accordingly, the index entry 620 includes the following content: type 622, offset 624, length 626 and page key 628. Illustratively, the index entry 620 manifests as a pointer from a higher level to a lower level, i.e., the index entry 620 essentially serves as linkage between the different levels of the dense tree. The hole entry (H) 630 represents absent data as a result of a hole punching operation at (offset, length) and includes the following content: type 632, offset 634, and length 636.

In an embodiment, the volume metadata entry types are of a fixed size (e.g., 12 bytes including a type field of 1 byte, an offset of 4 bytes, a length of 1 byte, and a key of 6 bytes) to facilitate search of the dense tree metadata structure as well as storage on metadata pages. Thus, some types may have unused portions, e.g., the hole entry 630 includes less information than the data entry 610 and so may have one or more unused bytes. In an alternative embodiment, the entries may be variable in size to avoid unused bytes. Advantageously, the volume metadata entries may be sized for in-core space efficiency (as well as alignment on metadata pages), which improves both read and write amplification for operations. For example, the length field (616, 626, 636) of the various volume metadata entry types may represent a unit of sector size, such as 512 bytes or 520 bytes, such that a 1 byte length may represent a range of 255 x 512 bytes = 128K bytes.

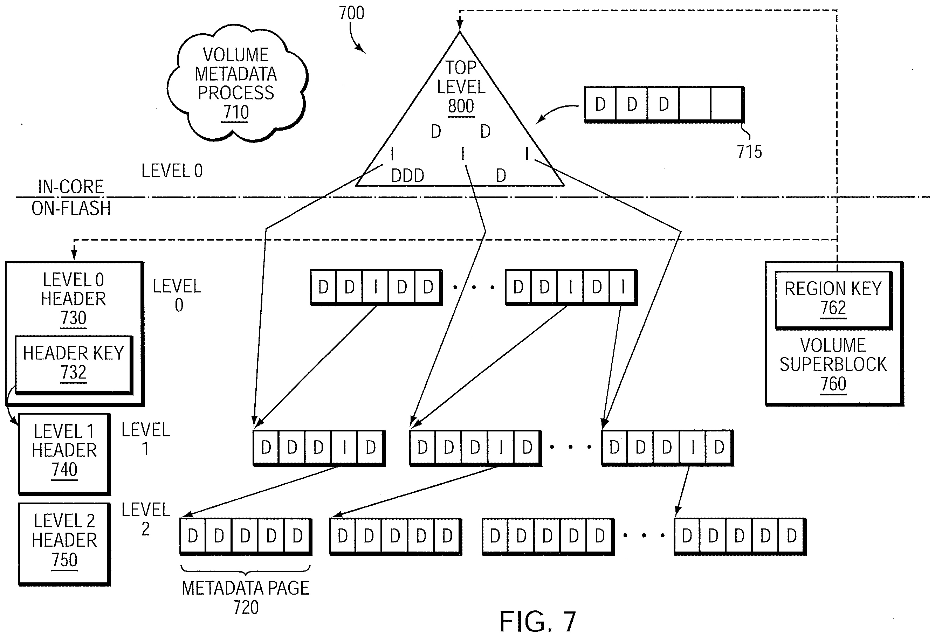

Fig. 7 is a block diagram of the dense tree metadata structure that may be advantageously used with one or more embodiments described herein. The dense tree metadata structure 700 is configured to provide mappings of logical offsets within a LUN (or volume) to extent keys managed by one or more extent store instances. Illustratively, the dense tree metadata structure is organized as a multi-level dense tree 700, where a top level 800 represents recent volume metadata changes and subsequent descending levels represent older changes. Specifically, a higher level of the dense tree 700 is updated first and, when that level fills, an adjacent lower level is updated, e.g., via a merge operation. A latest version of the changes may be searched starting at the top level of the dense tree and working down to the descending levels. Each level of the dense tree 700 includes fixed size records or entries, i.e., volume metadata entries 600, for storing the volume metadata. A volume metadata process 710 illustratively maintains the top level 800 of the dense tree in memory (in-core) as a balanced tree that enables indexing by offsets. The volume metadata process 710 also maintains a fixed sized (e.g., 4 KB) in-core buffer as a staging area (i.e., an in-core staging buffer 715) for volume metadata entries 600 inserted into the balanced tree (i.e., top level 800). Each level of the dense tree is further maintained on-flash as a packed array of volume metadata entries, wherein the entries are stored as extents illustratively organized as fixed sized (e.g., 4 KB) metadata pages 720. Notably, the staging buffer 715 is de-staged to SSD upon a trigger, e.g., the staging buffer is full. Each metadata page 720 has a unique identifier (ID), which guarantees that no two metadata pages can have the same content. Illustratively, metadata may not be de-duplicated by the extent store layer 350.

In an embodiment, the multi-level dense tree 700 includes three (3) levels, although it will be apparent to those skilled in the art that additional levels N of the dense tree may be included depending on parameters (e.g., size) of the dense tree configuration. Illustratively, the top level 800 of the tree is maintained in-core as level 0 and the lower levels are maintained on-flash as levels 1 and 2. In addition, copies of the volume metadata entries 600 stored in staging buffer 715 may also be maintained on-flash as, e.g., a level 0 linked list. A leaf level, e.g., level 2, of the dense tree contains data entries 610, whereas a non-leaf level, e.g., level 0 or 1, may contain both data entries 610 and index entries 620. Each index entry (I) 620 at level N of the tree is configured to point to (reference) a metadata page 720 at level N+1 of the tree. Each level of the dense tree 600 also includes a header (e.g., level 0 header 730, level 1 header 740 and level 2 header 750) that contains per level information, such as reference counts associated with the extents. Each upper level header contains a header key (an extent key for the header, e.g., header key 732 of level 0 header 730) to a corresponding lower level header. A region key 762 to a root, e.g., level 0 header 730 (and top level 800), of the dense tree 700 is illustratively stored on-flash and maintained in a volume root extent, e.g., a volume superblock 760. Notably, the volume superblock 760 contains region keys to the roots of the dense tree metadata structures for all regions in a volume.

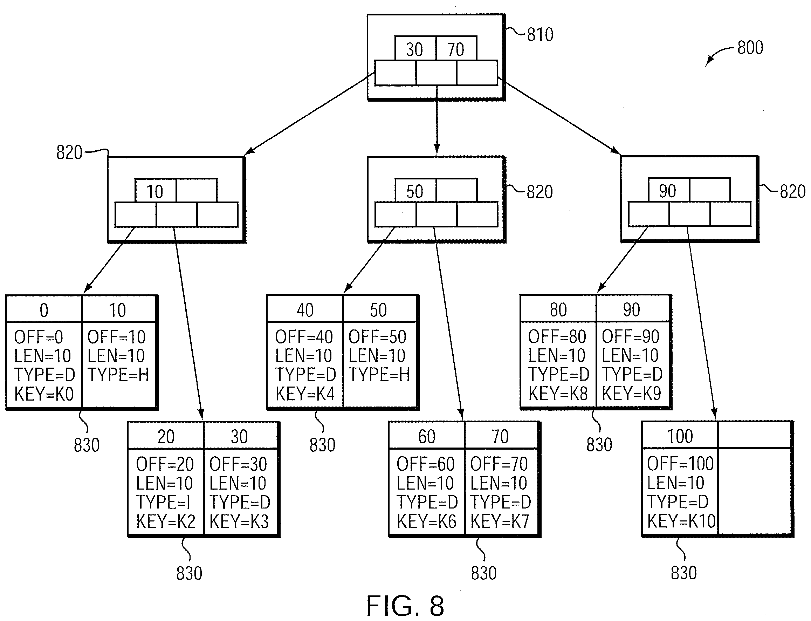

Fig. 8 is a block diagram of the top level 800 of the dense tree metadata structure. As noted, the top level (level 0) of the dense tree 700 is maintained in-core as a balanced tree, which is illustratively embodied as a B+ tree data structure. However, it will be apparent to those skilled in the art that other data structures, such as AVL trees, Red-Black trees, and heaps (partially sorted trees), may be advantageously used with the embodiments described herein. The B+ tree (top level 800) includes a root node 810, one or more internal nodes 820 and a plurality of leaf nodes (leaves) 830. The volume metadata stored on the tree is preferably organized in a manner that is efficient both to search, in order to service read requests and to traverse (walk) in ascending order of offset to accomplish merges to lower levels of the tree. The B+ tree has certain properties that satisfy these requirements, including storage of all data (i.e., volume metadata entries 600) in leaves 830 and storage of the leaves as sequentially accessible, e.g., as one or more linked lists. Both of these properties make sequential read requests for write data (i.e., extents) and read operations for dense tree merge more efficient. Also, since it has a much higher fan-out than a binary search tree, the illustrative B+ tree results in more efficient lookup operations. As an optimization, the leaves 830 of the B+ tree may be stored in a page cache 448, making access of data more efficient than other trees. In addition, resolution of overlapping offset entries in the B+ tree optimizes read requests of extents. Accordingly, the larger the fraction of the B+ tree (i.e., volume metadata) maintained in-core, the less loading (reading) of metadata from SSD is required so as to reduce read amplification.

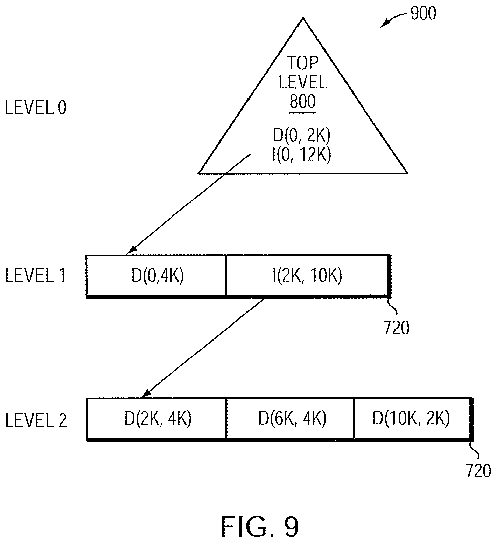

Fig. 9 illustrates mappings 900 between levels of the dense tree metadata structure. Each level of the dense tree 700 includes one or more metadata pages 720, each of which contains multiple volume metadata entries 600. As noted, each volume metadata entry 600 has a fixed size, e.g., 12 bytes, such that a predetermined number of entries may be packed into each metadata page 720. The data entry (D) 610 is a map of (offset, length) to an address of (user) data which is retrievable using an extent key 618 (i.e., from an extent store instance). The (offset, length) illustratively specifies an offset range of a LUN. The index entry (I) 620 is a map of (offset, length) to a page key 628 of a metadata page 720 at the next lower level. Illustratively, the offset in the index entry (I) 620 is the same as the offset of the first entry in the metadata page 720 at the next lower level. The length 626 in the index entry 620 is illustratively the cumulative length of all entries in the metadata page 720 at the next lower level (including gaps between entries).

For example, the metadata page 720 of level 1 includes an index entry "I(2K,10K)" that specifies a starting offset 2K and an ending offset 12K (i.e., 12K = 2K + 10K); the index entry (I) illustratively points to a metadata page 720 of level 2 covering the specified range. An aggregate view of the data entries (D) packed in the metadata page 720 of level 2 covers the mapping from the smallest offset (e.g., 2K) to the largest offset (e.g., 12K). Thus, each level of the dense tree 700 may be viewed as an overlay of an underlying level. For instance the data entry "D(0,4K)" of level 1 overlaps 2K of the underlying metadata in the page of level 2 (i.e., the range 2K,4K).

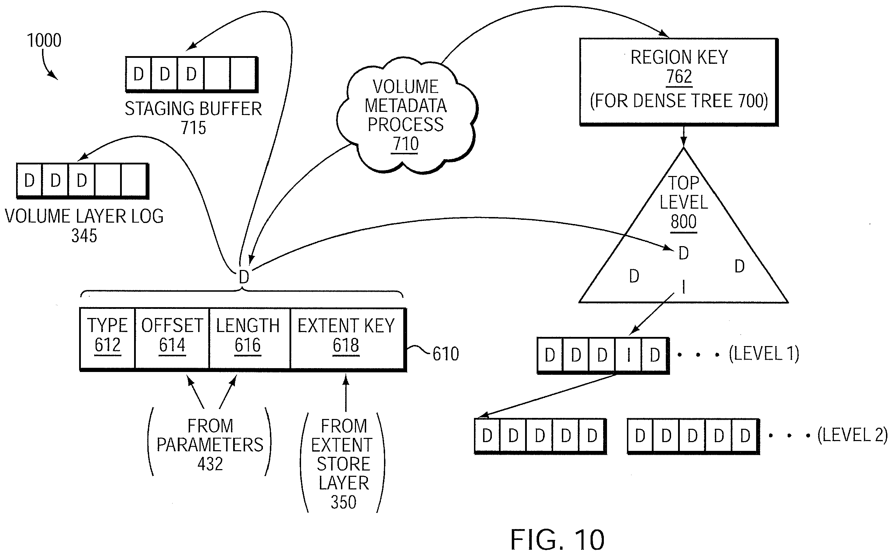

In one or more embodiments, operations for volume metadata managed by the volume layer 340 include insertion of volume metadata entries, such as data entries 610, into the dense tree 700 for write requests. As noted, each dense tree 700 may be embodied as multiple levels of a search structure with possibly overlapping offset range entries at each level, wherein each level is a packed array of entries (e.g., sorted by offset) and where leaf entries have an offset range (offset, length) an extent key. Fig. 10 illustrates a workflow 1000 for inserting a volume metadata entry into the dense tree metadata structure in accordance with a write request. In an embodiment, volume metadata updates (changes) to the dense tree 700 occur first at the top level of the tree, such that a complete, top-level description of the changes is maintained in memory 220.

Operationally, the volume metadata process 710 applies the region key 762 to access the dense tree 700 (i.e., top level 800) of an appropriate region (e.g., offset range 440 as determined from the parameters 432 derived from a write request 410). Upon completion of a write request, the volume metadata process 710 creates a volume metadata entry, e.g., a new data entry 610, to record a mapping of offset/length-to-extent key (i.e., offset range-to-user data). Illustratively, the new data entry 610 includes an extent key 618 (i.e., from the extent store layer 350) associated with data (i.e., extent 470) of the write request 410, as well as offset 614 and length 616 (i.e., from the write parameters 432) and type 612 (i.e., data entry D). The volume metadata process 710 then updates the volume metadata by inserting (adding) the data entry D into the level 0 staging buffer 715, as well as into the top level 800 of dense tree 700 and the volume layer log 345, thereby signifying that the write request is stored on the storage array 150.

### Dense Tree Volume Metadata Checkpointing

When a level of the dense tree 700 is full, volume metadata entries 600 of the level are merged with the next lower level of the dense tree. As part of the merge, new index entries 620 are created in the level to point to new lower level metadata pages 720, i.e., data entries from the level are merged (and pushed) to the lower level so that they may be "replaced" with an index reference in the level. The top level 800 (i.e., level 0) of the dense tree 700 is illustratively maintained in-core such that a merge operation to level 1 facilitates a checkpoint to SSD 260. The lower levels (i.e., levels 1 and/or 2) of the dense tree are illustratively maintained on-flash and updated (e.g., merged) as a batch operation (i.e., processing the entries of one level with those of a lower level) when the higher levels are full. The merge operation illustratively includes a sort, e.g., a 2-way merge sort operation. A parameter of the dense tree 700 is the ratio K of the size of level N-1 to the size of level N. Illustratively, the size of the array at level N is K times larger than the size of the array at level N-1, i.e., sizeof(level N) = K*sizeof(level N-1). After K merges from level N-1, level N becomes full (i.e., all entries from a new, fully-populated level N-1 are merged with level N, iterated K times.)

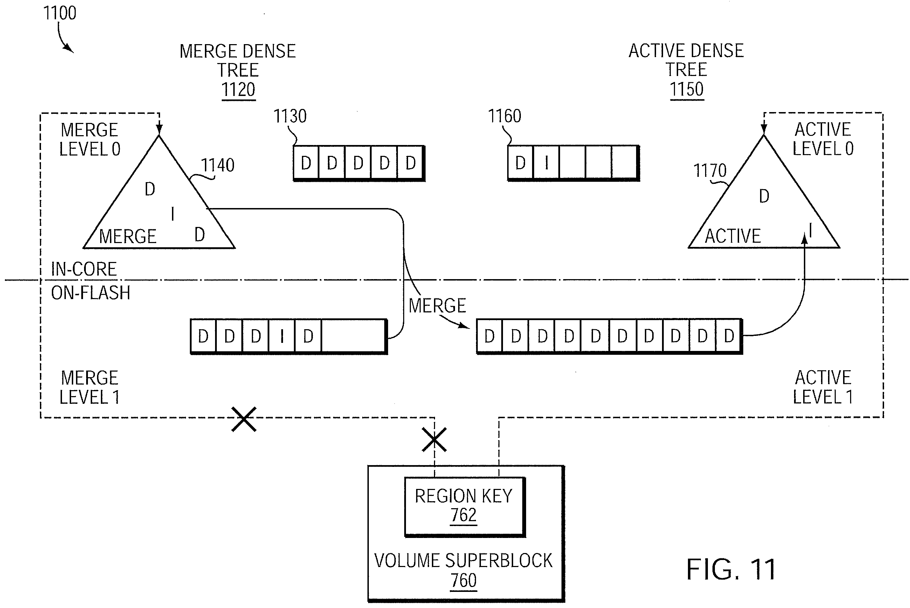

Fig. 11 illustrates merging 1100 between levels, e.g., levels 0 and 1, of the dense tree metadata structure. In an embodiment, a merge operation is triggered when level 0 is full. When performing the merge operation, the dense tree metadata structure transitions to a "merge" dense tree structure (shown at 1120) that merges, while an alternate "active" dense tree structure (shown at 1150) is utilized to accept incoming data. Accordingly, two in-core level 0 staging buffers 1130, 1160 are illustratively maintained for concurrent merge and active (write) operations, respectively. In other words, an active staging buffer 1160 and active top level 1170 of active dense tree 1150 handle in-progress data flow (i.e., active user read and write requests), while a merge staging buffer 1130 and merge top level 1140 of merge dense tree 1120 handle consistency of the data during a merge operation. That is, a "double buffer" arrangement may be used to handle the merge of data (i.e., entries in the level 0 of the dense tree) while processing active operations.

During the merge operation, the merge staging buffer 1130, as well as the top level 1140 and lower level array (e.g., merge level 1) are read-only and are not modified. The active staging buffer 1160 is configured to accept the incoming (user) data, i.e., the volume metadata entries received from new put operations are loaded into the active staging buffer 1160 and added to the top level 1170 of the active dense tree 1150. Illustratively, merging from level 0 to level 1 within the merge dense tree 1120 results in creation of a new active level 1 for the active dense tree 1150, i.e., the resulting merged level 1 from the merge dense tree is inserted as a new level 1 into the active dense tree. A new index entry I is computed to reference the new active level 1 and the new index entry I is loaded into the active staging buffer 1160 (as well as in the active top level 1170). Upon completion of the merge, the region key 762 of volume superblock 760 is updated to reference (point to) the root, e.g., active top level 1170 and active level 0 header (not shown), of the active dense tree 1150, thereby deleting (i.e., rendering inactive) merge level 0 and merge level 1 of the merge dense tree 1120. The merge staging buffer 1130 (and the top level 1140 of the dense tree) thus becomes an empty inactive buffer until the next merge. The merge data structures (i.e., the merge dense tree 1120 including staging buffer 1130) may be maintained in-core and "swapped" as the active data structures at the next merge (i.e., "double buffered").

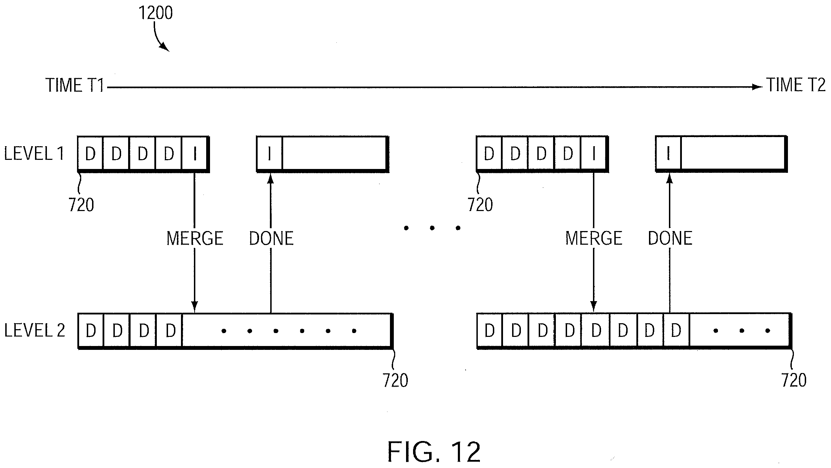

Fig. 12 illustrates batch updating 1200 between lower levels, e.g., levels 1 and 2, of the dense tree metadata structure. Illustratively, as an example, a metadata page 720 of level 1 includes four data entries D and an index entry I referencing a metadata page 720 of level 2. When full, level 1 batch updates (merges) to level 2, thus emptying the data entries D of level 1, i.e., contiguous data entries are combined (merged) and pushed to the next lower level with a reference inserted in their place in the level. The merge of changes of layer 1 into layer 2 illustratively produces a new set of extents on SSD, i.e., new metadata pages are also stored, illustratively, in an extent store instance. As noted, level 2 is illustratively several times larger, e.g., K times larger, than level 1 so that it can support multiple merges. Each time a merge is performed, some older entries that were previously on SSD may be deleted. Advantageously, use of the multi-level tree structure lowers the overall frequency of volume metadata that is rewritten (and hence reduces write amplification), because old metadata may be maintained on a level while new metadata is accumulated in that level until it is full. Further, when a plurality of upper levels become full, a multi-way merge to a lower level may be performed (e.g., a three-way merge from full levels 0 and 1 to level 2).

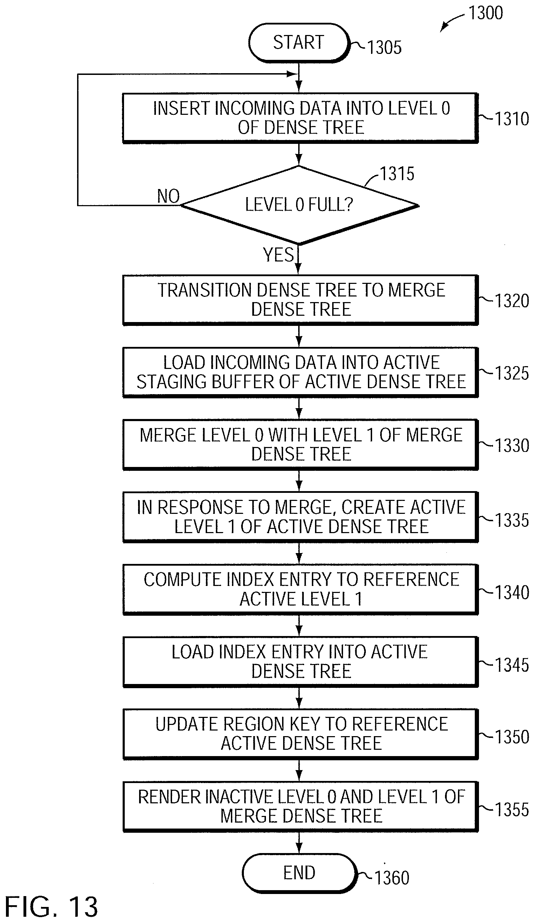

Fig. 13 is an example simplified procedure 1300 for merging between levels of the dense tree metadata structure. The procedure starts at step 1305 and proceeds to step 1310 where incoming data received at the dense tree metadata structure is inserted into level 0, i.e., top level 800, of the dense tree. Note that the incoming data is inserted into the top level 800 as a volume metadata entry. At step 1315, a determination is made as whether level 0, i.e., top level 800, of the dense tree is rendered full. If not, the procedure returns to step 1310; otherwise, if the level 0 is full, the dense tree transitions to a merge dense tree structure at step 1320. At step 1325, incoming data is loaded into an active staging buffer of an active dense tree structure and, at step 1330, the level 0 merges with level 1 of the merge dense tree structure. In response to the merge, a new active level 1 is created for the active dense tree structure at step 1335. At step 1340, an index entry is computed to reference the new active level 1 and, at step 1345, the index entry is loaded into the active dense tree structure. At step 1350, a region key of a volume superblock is updated to reference the active dense tree structure and, at step 1355, the level 0 and level 1 of the merge dense tree structure are rendered inactive (alternatively, deleted). The procedure then ends at step 1360.

In an embodiment, as the dense tree fills up, the volume metadata is written out to one or more files on SSD in a sequential format, independent of when the volume layer log 345 is de-staged and written to SSD 260, i.e., logging operations may be independent of merge operations. When writing volume metadata from memory 220 to SSD, direct pointers to the data, e.g., in-core references to memory locations, may be replaced with pointers to an index block in the file that references a location where the metadata can be found. As the files are accumulated, they are illustratively merged together in a log-structured manner that continually writes the metadata sequentially to SSD. As a result, the lower level files grow and contain volume metadata that may be outdated because updates have occurred to the metadata, e.g., newer entries in the dense tree may overlay older entries, such as a hole entry overlaying an underlying data entry. The updates (i.e., layered LBA ranges) are "folded" into the lower levels, thereby overwriting the outdated metadata. The resulting dense tree structure thus includes newly written metadata and "holes" where outdated metadata has been deleted.

### Dense Tree Volume Metadata Logging

In an embodiment, the volume layer log 345 is a two level, append-only logging structure, wherein the first level is NVRAM 280 (embodied as NVLogs 285) and the second level is SSD 260, e.g., stored as extents. New volume metadata entries 600 inserted into level 0 of the dense tree are also recorded in the volume layer log 345 of NVLogs 285. When there are sufficient entries in the volume layer log 345, e.g., when the log 345 is full or exceeds a threshold, the volume metadata entries are flushed (written) from log 345 (i.e., from NVRAM) to SSD 260 as one or more extents 470. Multiple extents may be linked together with the volume superblock 760 holding a key (i.e., an extent key) to the head of the list. In the case of recovery, the volume layer log 345 is read back to memory 220 to reconstruct the in-core top level 800 (i.e., level 0) of dense tree 700. Other levels may be demand paged via the page cache 448, e.g., metadata pages of level 1 are loaded and read as needed.

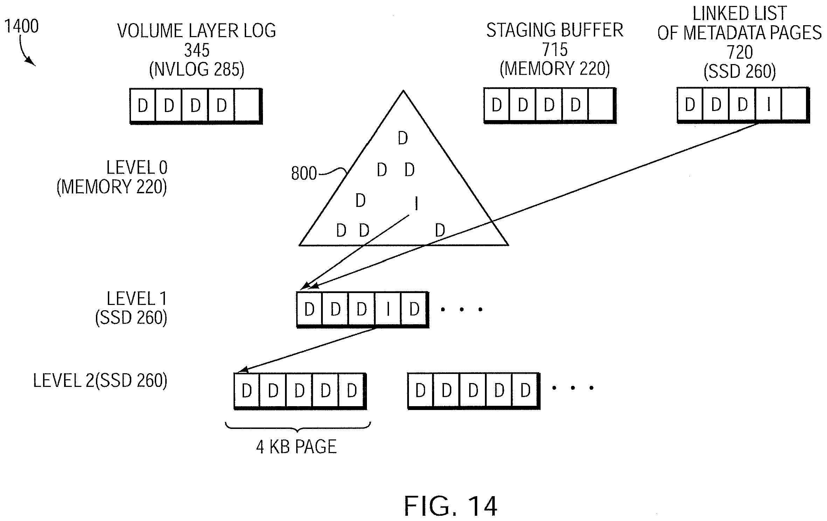

Fig. 14 illustrates volume logging 1400 of the dense tree metadata structure. Copies of the volume metadata entries 600 stored in level 0 of the dense tree are maintained in persistent storage (SSD 260) and recorded as volume layer log 345 in, e.g., NVLogs 285. Specifically, the entries of level 0 are stored in the in-core staging buffer 715, logged in the append log (volume layer log 345) of NVLogs 285 and thereafter flushed to SSD 260 as a set of metadata pages 720. Copies of the level 0 volume metadata are maintained in-core as the active dense tree level 0 so as to service incoming read requests from memory 220. Illustratively, the in-core top level 800 (e.g., active dense tree level 0 1170) may be used as a cache (for hot metadata), whereas the volume metadata stored on the other lower levels of the dense tree are accessed less frequently (cold data) and maintained on SSD. Alternatively, the lower levels also may be cached using the page cache 448.

### Low-Overhead Restartable Merge Operation

The embodiments herein are directed to a low-overhead merge technique that enables restart of a merge operation with minimal logging of state information relating to progress of the merge operation by the volume layer. The technique enables restart of the merge operation by ensuring that metadata, i.e., volume metadata entries, generated during the merge operation is unique and, thus, is not subject to de-duplication. As noted previously, the volume layer may organize the volume metadata entries as metadata pages 720, i.e., extents, for storage in an extent store maintained by the extent store layer. As used herein, the extent store may be viewed as a global pool of extents stored on the storage arrays of the cluster. The extent store layer may be configured to de-duplicate extents having identical (user) data. When a level of the dense tree is full, the volume metadata entries of the level are merged with the next lower level of the dense tree in accordance with the merge operation. As a result, new metadata pages are produced and older (now obsolete) metadata pages may be deleted. Illustratively, the low-overhead merge technique ensures that the merge operation is restartable (i.e., repeatable) after a crash (i.e., an unexpected interruption or shutdown).

Minimal state information about the merge (including changes to dense tree headers and insertions of entries into a reference count log) is recorded during the merge operation to reduce write amplification. As such, metadata pages generated during the restart of the merge operation may be identical to (and have identical page keys as) pages generated during the crashed merge operation such that the restart metadata pages may de-duplicate prior (i.e., crashed) metadata pages. According to the technique, volume metadata generated during the merge operation is not subject to de-duplication by (1) providing a uniqifier (i.e., unique ID 720) in each metadata page that distinguishes the page, i.e., renders the page distinct or "unique", from other metadata pages in the extent store; and (2) preventing de-duplication of identical metadata pages (i.e., having a same page key), other than during restart of a merge operation. Notably, locations of identical metadata pages (e.g., during restart of a merge operation) may directly replace locations 490 in the hash tables 482 associated with prior metadata pages and avoid extent hashing 474 (i.e., avoid hashing again the identical metadata page).

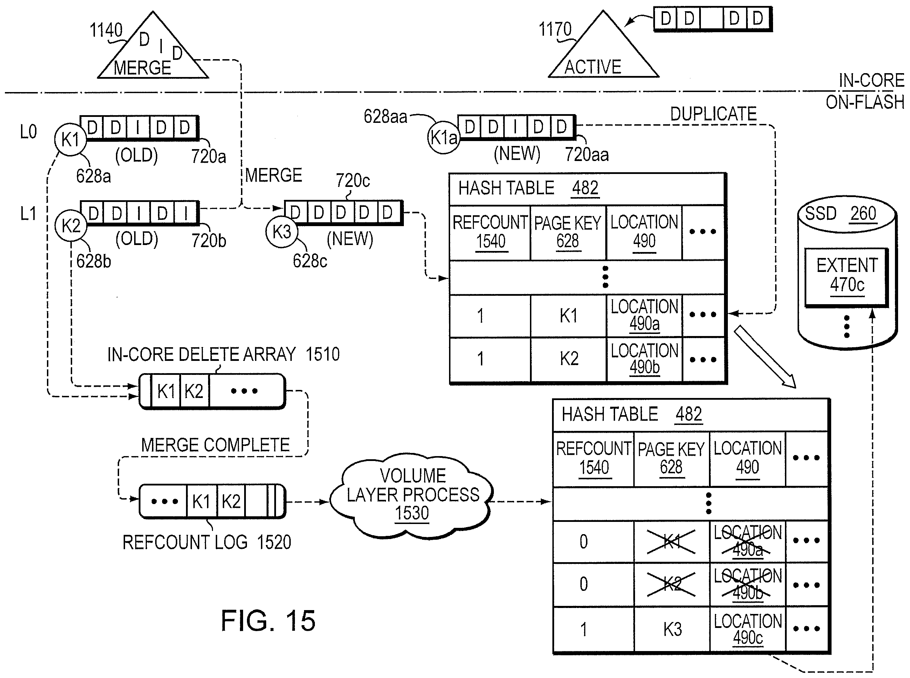

Fig. 15 illustrates the low-overhead merge technique. In an embodiment, older metadata pages 720a,b (having page keys K1" and "K2" 628a,b respectively) generated during the merge are replaced with a new metadata page 720c (having key "K3" 628c). The keys K1, K2 of the older pages are stored (i.e., accumulated) in an in-core delete array 1510 pending completion of the merge operation. As understood by persons of skill in the art, various data structures (e.g., linked lists, trees) may be used to accumulate in-core the keys of the older pages. Once the merge operation completes, the page keys (i.e., K1, K2) may be persistently recorded in a set of data structures embodied as a reference count (refcount) log 1520 to allow the merge operation to complete without resolving deletion (e.g., reference count reduction) of the keys (and, thus, freeing the space referenced by locations 490a,b on SSD storing the metadata pages 720a,b associated with the page keys K1, K2). Subsequently, a volume layer process 1530 may be spawned (instantiated) to "walk" through the page keys stored in the refcount log and delete (i.e., reference count reduce) each key from the refcount log 1530, out-of-band of the merge operation. Note that key deletion may occur when a reference count 1540 associate with page key 628 (i.e., key associated with an extent storing the metadata page) reduces to a sentinel value (e.g., zero). Illustratively, the extent store layer may effect deletion (e.g., a reference count of zero) for each key by clearing a corresponding entry in the hash table 482, thereby dereferencing the location 490 indicating the extent storing the metadata page. Note further that new metadata pages may be generated (1) by the merge (e.g., page 720c) and (2) from incoming data (e.g., page 720aa), which may be recorded in the hash table 482 before the deferred delete process effects deletion of the old extents 720a,b.

To reduce having to log (i.e., maintain) information during the merge of metadata pages and to support idempotent merge operations (i.e., merging between levels of the dense tree metadata structure) the reference count for each metadata page illustratively does not permit duplicates. That is, the extent store layer may be configured to safely ignore possible metadata page duplicates by not incrementing the refcount 1540 for a metadata page even if, during the merge operation, the metadata page is identical to (and thus subject to deduplication of) an existing metadata page in the extent store. In other words, metadata pages are not de-duplicated by extent store layer so as to support restartable merge operations using the low-overhead merge technique. Illustratively, a value of the refcount 1540 in the hash table 482 associated with a metadata page may be a first sentinel value indicating the metadata page exists in the extent store (e.g., "1") with a second sentinel value indicating that the page does not exist (e.g., "0") being implied by a lack of an extent in the hash table 482. Note that the extent store layer may remain configured to de-duplicate (user) data extents having identical data. However a problem may arise, when, for example, a duplicate metadata page 720aa associated with a page key "K1a" is identical to the page 720a (and associated key K1) such that an entry of hash table 482 corresponding to key K1 (and identical key K1a) is subsequently cleared when processing the refcount log, thereby deleting both the old (i.e., obsolete) metadata page 720a and the new (i.e., incoming data) metadata page 720aa. To avoid such a problem, each metadata page may be rendered (made) unique (i.e., none identical) by including a uniqifier (the unique ID 720) having a value that obviates the need for metadata page de-duplication.

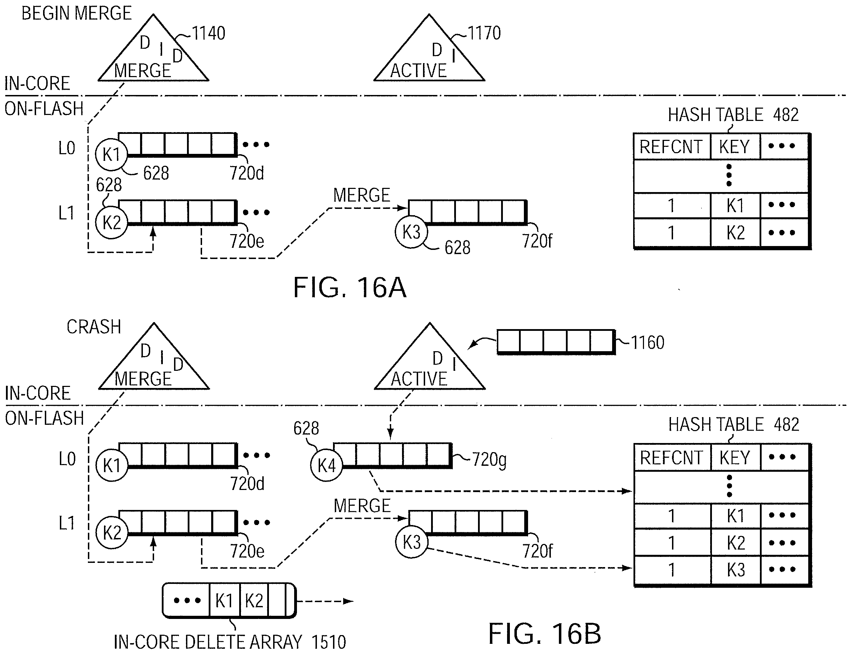

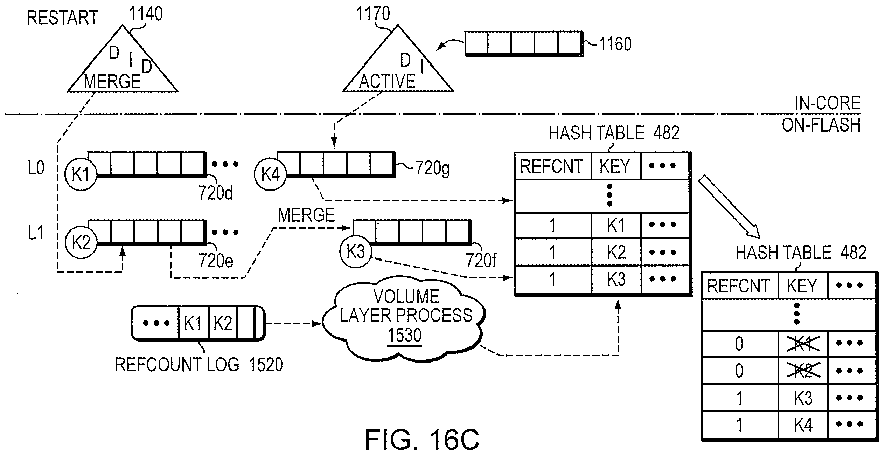

Figs.16a-c illustrate merge, crash and restart using the low-overhead merge technique. The merge operation may begin illustratively by merging volume metadata entries from the top-level 1140 with entries in level 1 (LI) included in metadata page 720e to yield new (i.e., merged) entries included in metadata page 720f. Existing metadata pages 720d,e may correspond to entries of the hash table 482 having associated page keys 628 (e.g., page 720d associated with key "K1" and page 720e associated with key "K2") and refcounts. Prior to a crash (i.e., an unexpected interruption or shutdown), incoming data from the staging buffer 1160 may be inserted into the active top-level 1170 and recorded in a level 0 (L0) page 720g (associated with key "K4"). Notably, an entry in the hash table 482 also may be recorded corresponding to the new metadata page 720f (associated with key "K3"). Subsequently, during restart (i.e., repeat) of the merge operation according to the low-overhead merge technique, volume metadata entries from the top-level 1140 may be again merged with entries in level 1 (LI) included in metadata page 720e to again yield the same new entries included in metadata page 720f which may be effectively de-duplicated in the corresponding hash table 482 entry (i.e., overwritten without increasing the refcount in the corresponding hash table entry). Note that the refcount log does not contain keys K1, K2 of obsolete pages 720d,e subject to deletion, because the merge operation may have crashed without completion depending on when the crash occurred (thus, keys in the in-core delete array are not recorded in the refcount log). Illustratively, a transaction pointer (not shown) may be persistently maintained (e.g., in NVRAM) for the refcount log to support rollback of refcount increments (e.g., for user data pages) which may have been logged during the merge operation. Note also that the hash table may be recovered prior to restart of the merge operation to a state as of the time of the crash, (i.e., including the hash table entries with keys K1, K2, and K3).

Accordingly, to support restartable merge operations and benefit from reduced write amplification, the low-overhead merge technique obviates (prevents) rendering of identical metadata pages with equivalent page keys (not as a result of merge restart) because metadata pages are not de-duplicated. As stated, so that identical metadata pages may not be erroneously deleted, i.e., dereferenced, such as page 720aa associated with key K1a described above. Each metadata page may be rendered (made) unique (i.e., none identical) by including the uniqifier (the unique ID 720) having a value that obviates the need for page de-duplication and, thus, permits restartable merge operations. Note that identical metadata page information may occur across levels, regions, generations of dense trees (e.g., merge dense tree and active dense tree), and volumes.

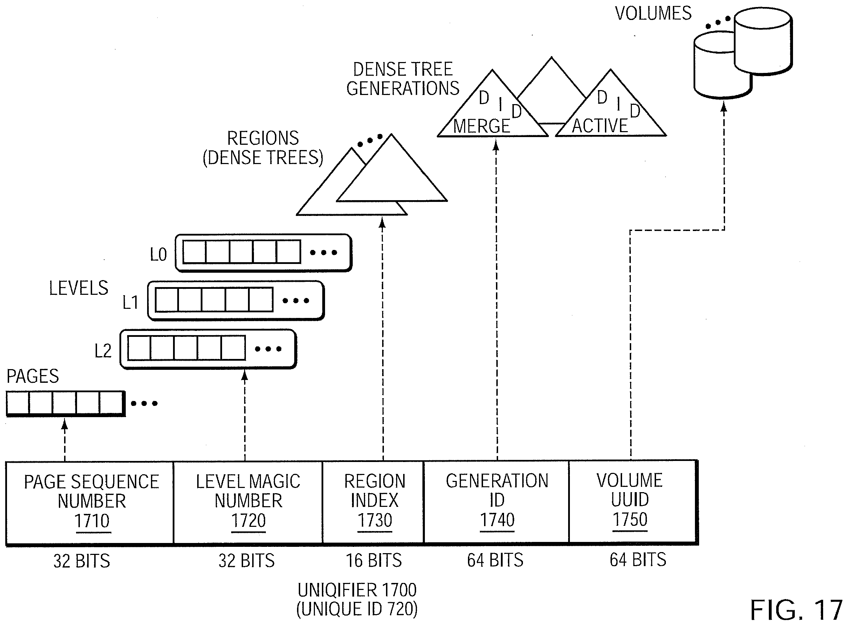

Fig. 17 is a block diagram of a metadata page uniqifier (i.e., unique value). The unique value is illustratively embodied as a multi-component uniqifier 1700 contained in a header (not shown) of each metadata page and configured to render the page unique across all levels of a dense tree (region), across all regions and across all volumes in the volume layer. The first component, a page sequence number 1710, of the uniqifier renders the page unique within level 0 of a dense tree (region). Uniqueness within level 0 is desirable because the metadata pages may include volume metadata entries with the same offset, length and extent key (i.e. the same data may be written throughout all metadata entries of level 0.) Level 0 collects essentially {offset, length, key} triplets (or holes) as metadata entries without sorting those entries (i.e., the entries are unordered). However, metadata entries stored on levels 1 and 2 are sorted by offset as part of the merge operation, as such identical entries, e.g., having a same {offset, length, key} triplet, may not reside in levels 1 or 2. That is, volume metadata entries (and hence metadata pages including those entries) may be unique to levels 1 and 2 for a given dense tree (i.e., entries with identical offsets are merged). Accordingly, the low-overhead merge technique may render unique each metadata page in level 0 by providing a page sequence number 1710 as the first component of the uniqifier 1700, i.e., the pages are numbered (e.g. sequentially as generated) with (e.g., consecutive) sequence numbers to make them unique within level 0. Although not strictly required, the metadata pages may also be numbered, e.g., sequentially, for levels 1 and 2. Note that use of alternative representations for offsets (e.g., relative offsets) may not assure unique metadata pages in levels 1 and 2 (i.e., sorted by relative offset), so that in such a case, the page sequence number 1710 is necessary for each metadata page in levels 1 and 2.

A second component of the uniqifier renders the page unique among/across levels of the dense tree (region), as provided by a level magic number 1720. Illustratively, every page in level 0 is associated with a magic number, every page in level 1 is associated with a different magic number and every page in level 2 is associated with yet another different magic number. That is, each level of the dense tree is associated with a different magic number. Magic numbering is thus illustratively used for all regions and volumes in the volume layer to ensure that the pages are unique across the various levels of the dense tree. In an embodiment, the magic number is a constant (i.e., common) across each level, e.g., there is a level 0 magic number, a level 1 magic number and a level 2 magic number. That is, any page of a given region of any volume in a level of the dense tree has the same magic number, i.e., the magic number is a level-specific number within the dense tree, such as "0" for level 0, "1" for level 1, and "2" for level 2. Note that the first and second components of the uniqifier render the page unique only within a dense tree, i.e., the page may be de-duplicated with another page in another dense tree, because it is not yet distinguishable across dense trees. Accordingly, a size of the magic number need only be sufficiently large to hold a unique value for each level of the dense tree, e.g., 2 bits to hold values "0", "1", and "2".

Accordingly, a third component of the uniqifier renders the page unique among/across dense trees or regions of a volume, as provided by a region index (number) 1730. Illustratively, the region number renders each metadata page of a dense tree unique within a volume. That is, each region is identified by a value which may, e.g., be a number within the range of a maximum number of regions for a volume. A fourth component of the uniqifier is provided by the low-overhead merge technique to render the page unique among/across volumes. Here, a universally unique identifier (UUID) 1750 of each volume is illustratively used to distinguish the volumes of the volume layer.

A fifth component of the uniqifier is a generation number 1740, which may be configured for a plurality of purposes including to ensure uniqueness between metadata pages in the merge dense tree and those in the active dense tree, i.e., versions (generations) of the dense tree. After a merge operation, old pages from level 0 and level 1 (which were written and merged to level 1) need to be deleted. However, as noted previously, those old pages are not deleted "in-line" with the merge operation, i.e., volume layer does not have to wait for the pages to be deleted in order to declare the merge complete. Rather, the old pages may be recorded in the refcount log 1520 from the in-core delete array 1510 and deleted lazily in the background by the volume layer process 1530. Accordingly, the old pages (e.g. level 0 pages) could still be in the extent store but not yet deleted when a similar pattern of write data is received at the node and which results in the volume layer generating new pages that are identical to those old pages.

Illustratively, a different generation number 1740 is associated with each level of the dense tree. That is, all pages of a level assume (copy) the generation number associated with that level. In response to a merge operation, the generation number associated with each level may be incremented. By incrementing the generation number for the levels in ascending order, newly received volume metadata entries (at the volume layer) are organized as metadata pages having a generation number that is greater (i.e., different version) than that of the old metadata pages submitted for deletion to the refcount log 1520. Therefore, metadata pages that are persisted in the refcount log (and destined for lazy deletion) have a different generation number, and thus a different uniqifier (and, thus, are unique), from that of the newly generated metadata pages, even if the content (i.e., metadata volumes entries) of those pages is identical.

In an embodiment, the uniqifier is a five-tuple value, wherein the first tuple (page sequence number) is 32 bits; the second tuple (level magic number) is 32 bits; the third tuple (region number) is 16 bits; the fourth tuple (volume UUID) is 64 bits and the fifth tuple (generation number) is 64 bits in length.

Advantageously, the low-overhead merge technique enables restart (i.e., repeat) of a merge operation with minimal logging of state information relating to progress of the merge operation, thereby reducing write amplification. Specifically, the technique enables restart of the merge operation by ensuring that metadata, i.e., volume metadata entries, generated during the merge operation is not subject to de-duplication. Accordingly, volume metadata pages generated during the merge operation are not subject to de-duplication by (1) providing a uniqifier (i.e., unique ID 720) in each metadata page that distinguishes the page, i.e., renders the page distinct or "unique", from other metadata pages in the extent store; and (2) preventing de-duplication of identical metadata pages (i.e., associated with a same page key), other than during restart of a merge operation.

The foregoing description has been directed to specific embodiments. It will be apparent, however, that other variations and modifications may be made to the described embodiments, with the attainment of some or all of their advantages. For instance, it is expressly contemplated that the components and/or elements described herein can be implemented as software encoded on a tangible (non-transitory) computer-readable medium (e.g., disks and/or CDs) having program instructions executing on a computer, hardware, firmware, or a combination thereof. Accordingly this description is to be taken only by way of example and not to otherwise limit the scope of the embodiments herein. Therefore, it is the object of the appended claims to cover all such variations and modifications as come within the true scope of the embodiments herein.

## Claims

1. A method of operating a storage system (200) comprising a memory (220) and having a storage array (150) coupled thereto, the storage array comprising one or more solid state drives (260), SSDs, the storage system including an extent store layer (350) for storing extents (470), wherein the extent store layer is configured to de-duplicate extents having identical data, the method comprising:
receiving a write request (410) directed towards a logical unit, LUN, the write request having data (414), a logical block address, LBA, and a length representing a first address range of the LUN, the write request being processed at the storage system;
associating a data key (618) with the data;
storing the data key in a first data entry of a metadata structure (700), the first data entry representing the first address range of the LUN, the data being de-duplicated with a first extent stored on the storage array comprising one or more solid state drives;
merging the first data entry of the metadata structure with a second data entry of the metadata structure to form a third data entry, the second data entry representing a second address range, the third data entry representing a merge of the first address range and the second address range, the second data entry including the data key, the second data entry being stored in a second extent on the storage array; and
storing the third data entry in a third extent on the storage array, the third extent including a uniqifier (720; 1700), wherein the uniqifier comprises a unique value that renders the third extent distinct from other extents, thereby avoiding de-duplication with the second extent during a merge restart operation.

2. The method of claim 1 further comprising:
in response to an unexpected interruption of merging the first data entry of the metadata structure with the second data entry of the metadata structure, repeating the merging of the first data entry of the metadata structure with the second data entry of the metadata structure to form a duplicate of the third data entry, wherein a reference count (1540) associated with third data entry remains unchanged.

3. The method of claim 1 wherein the second extent is deleted.

4. The method of claim 2 wherein a first reference count associated with the first extent is increased.

5. The method of claim 1 wherein the uniqifier includes a page number (1710) having a unique value assigned to each page of a set of pages in a first level of the metadata data structure.

6. The method of claim 5 wherein the uniqifier includes a first unique level number (1720) assigned to the first level of a plurality of levels of the metadata structure, and wherein a second unique level number different from the first unique level number is assigned to a second level of the plurality of levels.

7. The method of claim 6 wherein the uniqifier includes a universally unique identifier (1750) associated with the LUN.

8. The method of claim 1 wherein the metadata structure is associated with an index identifying the metadata structure from a plurality of metadata structures representing an entire address range of the LUN, and wherein the uniqifier includes the index (1730).

9. The method of claim 1 wherein the merging of the first data entry of the metadata structure with the second data entry of the metadata structure to form the third data entry is performed without substantial recording of state information.

10. The method of claim 1 wherein the third extent includes a uniqifier having a first generation identifier (1740), ID, assigned to a first level of a plurality of levels of the metadata structure, and wherein a second generation ID incremented from the first generation ID is assigned to a second level of the plurality of levels.

11. A system comprising:
a storage system having a memory connected to a processor via a bus;
a storage array coupled to the storage system and having one or more solid state drives (SSDs);
a storage I/O stack executing on the processor of the storage system, the storage I/O stack including an extent store layer for storing extents, the extent store layer being configured to de-duplicate extents having identical data, the storage I/O stack when executed operable to:
receive a write request directed towards a logical unit, LUN, the write request having data, a logical block address, LBA, and a length representing a first address range of the LUN;
associate a data key with the data;
store the data key in a first data entry of a metadata structure, the first data entry representing the first address range of the LUN, the data being de-duplicated with a first extent stored on the storage array;
merge the first data entry of the metadata structure with a second data entry of the metadata structure to form a third data entry, the second data entry representing a second address range, the third data entry representing a merge of the first address range and the second address range, the second data entry including the data key, the second data entry being stored in a second extent on the storage array; and
store the third data entry in a third extent on the storage array, the third extent including a uniqifier, wherein the uniqifier comprises a unique value that renders the third extent distinct from other extents, thereby avoiding de-duplication with the second extent during a merge restart operation.

12. The system of claim 11 wherein the storage I/O stack is further operable to:
in response to an unexpected interruption of merging the first data entry of the metadata structure with the second data entry of the metadata structure, repeat the merge of the first data entry of the metadata structure with the second data entry of the metadata structure to form a duplicate of the third data entry, wherein a reference count associated with the third data entry remains unchanged;
and optionally wherein a first reference count associated with the first extent is increased.

13. The system of claim 11 wherein the uniqifier includes a page number having a unique value assigned to each page of a set of pages in a first level of the metadata data structure; and optionally wherein the uniqifier includes a first unique level number assigned to the first level of a plurality of levels of the metadata structure, and wherein a second unique level number different from the first unique level number is assigned to a second level of the plurality of levels

14. The system of claim 11 wherein the metadata structure is associated with an index identifying the metadata structure from a plurality of metadata structures representing an entire address range of the LUN, and wherein the uniqifier includes the index.

15. The system of claim 11 wherein the uniqifier includes a generation identifier (ID) assigned to a first level of a plurality of levels of the metadata structure, and wherein a second generation ID incremented from the first generation ID is assigned to a second level of the plurality of levels.

## Patentansprüche

1. Verfahren zum Betreiben eines Speichersystems (200), umfassend einen Speicher (220) und mit einer daran gekoppelten Speichergruppe (150), wobei die Speichergruppe ein oder mehr Solid-State-Laufwerke (260), SSDs, umfasst, wobei das Speichersystem eine Erweiterungsspeicherschicht (350) zum Speichern von Erweiterungen (470) enthält, wobei die Erweiterungsspeicherschicht konfiguriert ist, Erweiterungen mit identischen Daten zu deduplizieren, wobei das Verfahren Folgendes umfasst:
Empfangen einer Schreibanfrage (410), die an eine logische Einheit, LUN, gerichtet ist, wobei die Schreibanfrage Daten (414), eine logische Blockadresse, LBA, und eine Länge, die einen ersten Adressenbereich der LUN darstellt, aufweist, wobei die Schreibanfrage beim Speichersystem verarbeitet wird;
Verknüpfen eines Datenschlüssels (618) mit den Daten;
Speichern des Datenschlüssels in einem ersten Dateneintrag einer Metadatenstruktur (700), wobei der erste Dateneintrag den ersten Adressenbereich der LUN darstellt, die Daten mit einer ersten Erweiterung dedupliziert werden, die an der Speichergruppe gespeichert ist, die ein oder mehr Solid-State-Laufwerke umfasst;
Sortiermischen des ersten Dateneintrags der Metadatenstruktur mit einem zweiten Dateneintrag der Metadatenstruktur, um einen dritten Dateneintrag zu bilden, wobei der zweite Dateneintrag einen zweiten Adressenbereich darstellt, der dritte Dateneintrag ein Sortiermischen des ersten Adressenbereichs und des zweiten Adressenbereichs darstellt, der zweite Dateneintrag den Datenschlüssel enthält, der zweite Dateneintrag in einer zweiten Erweiterung an der Speichergruppe gespeichert ist; und
Speichern des dritten Dateneintrags in einer dritten Erweiterung an der Speichergruppe, wobei die dritte Erweiterung einen Uniquifier (720; 1700) enthält, wobei der Uniquifier einen einzigartigen Wert umfasst, der die dritte Erweiterung von anderen Erweiterungen unterscheidet, wodurch eine De-Depulikation mit der zweiten Erweiterung während einer Sortiermisch-Neustartoperation vermieden wird.

2. Verfahren nach Anspruch 1, ferner umfassend:
als Reaktion auf eine unerwartete Unterbrechung des Sortiermischens des ersten Dateneintrags der Metadatenstruktur mit dem zweiten Dateneintrag der Metadatenstruktur, Wiederholen des Sortiermischens des ersten Dateneintrags der Metadatenstruktur mit dem zweiten Dateneintrag der Metadatenstruktur, um ein Duplikat des dritten Dateneintrags zu bilden, wobei eine Referenzzählung (1540), die mit dem dritten Dateneintrag verknüpft ist, unverändert bleibt.

3. Verfahren nach Anspruch 1, wobei die zweite Erweiterung gelöscht wird.

4. Verfahren nach Anspruch 2, wobei eine erste Referenzzählung, die mit der ersten Erweiterung verknüpft ist, erhöht ist.

5. Verfahren nach Anspruch 1, wobei der Uniquifier eine Seitennummer (1710) mit einem einzigartigen Wert enthält, der jeder Seite eines Satzes von Seiten in einer ersten Ebene der Metadaten-Datenstruktur zugeordnet ist.

6. Verfahren nach Anspruch 5, wobei der Uniquifier eine erste einzigartige Ebenennummer (1720) enthält, die der ersten Ebene mehrerer Ebenen der Metadatenstruktur zugeordnet ist, und wobei eine zweite einzigartige Ebenennummer, die sich von der ersten einzigartigen Ebenennummer unterscheidet, einer zweiten Ebene der mehreren Ebenen zugeordnet ist.

7. Verfahren nach Anspruch 6, wobei der Uniquifier eine universell einzigartige Kennung (1750) enthält, die mit der LUN verknüpft ist.

8. Verfahren nach Anspruch 1, wobei die Metadatenstruktur mit einem Index verknüpft ist, der die Metadatenstruktur aus mehreren Metadatenstrukturen identifiziert, die einen vollständigen Adressenbereich der LUN darstellen, und wobei der Uniquifier den Index (1730) enthält.

9. Verfahren nach Anspruch 1, wobei das Sortiermischen des ersten Dateneintrags der Metadatenstruktur mit dem zweiten Dateneintrag der Metadatenstruktur, um den dritten Dateneintrag zu bilden, ohne wesentliche Aufzeichnung von Zustandsinformationen durchgeführt wird.

10. Verfahren nach Anspruch 1, wobei die dritte Erweiterung einen Uniquifier mit einer ersten Generierungskennung (1740), ID, enthält, die einer ersten Ebene der mehreren Ebenen der Metadatenstruktur zugewiesen ist, und wobei eine zweite Generierungs-ID, die von der ersten Generierungs-ID erhöht ist, einer zweiten Ebene der mehreren Ebenen zugewiesen ist.

11. System, umfassend
ein Speichersystem mit einem Speicher, der über einen Bus mit einem Prozessor verbunden ist;
eine Speichergruppe, die an das Speichersystem gekoppelt ist und ein oder mehr Solid-State-Laufwerke (SDDs) aufweist;
einen Speicher-I/O-Stapel, der auf dem Prozessor des Speichersystems läuft, wobei der Speicher-I/O-Stapel eine Erweiterungsspeicherschicht zum Speichern von Erweiterungen enthält, wobei die Erweiterungsspeicherschicht konfiguriert ist, Erweiterungen mit identischen Daten zu deduplizieren, wobei der Speicher-I/O-Stapel, wenn er läuft, betriebsbereit ist zum:
Empfangen einer Schreibanfrage, die an eine logische Einheit, LUN, gerichtet ist, wobei die Schreibanfrage Daten, eine logische Blockadresse, LBA, und eine Länge, die einen ersten Adressenbereich der LUN darstellt, aufweist;
Verknüpfen eines Datenschlüssels mit den Daten;
Speichern des Datenschlüssels in einem ersten Dateneintrag einer Metadatenstruktur, wobei der erste Dateneintrag den ersten Adressenbereich der LUN darstellt, die Daten mit einer ersten Erweiterung dedupliziert werden, der an der Speichergruppe gespeichert ist;
Sortiermischen des ersten Dateneintrags der Metadatenstruktur mit einem zweiten Dateneintrag der Metadatenstruktur, um einen dritten Dateneintrag zu bilden, wobei der zweite Dateneintrag einen zweiten Adressenbereich darstellt, der dritte Dateneintrag ein Sortiermischen des ersten Adressenbereichs und des zweiten Adressenbereichs darstellt, der zweite Dateneintrag den Datenschlüssel enthält, der zweite Dateneintrag in einer zweiten Erweiterung an der Speichergruppe gespeichert ist; und
Speichern des dritten Dateneintrags in einer dritten Erweiterung an der Speichergruppe, wobei die dritte Erweiterung einen Uniquifier enthält, wobei der Uniquifier einen einzigartigen Wert umfasst, der die dritte Erweiterung von anderen Erweiterungen unterscheidet, wodurch eine De-Depulikation mit der zweiten Erweiterung während einer Sortiermisch-Neustartoperation vermieden wird.

12. System nach Anspruch 11, wobei der Speicher-I/0-Stapel ferner betriebsbereit ist zum:
als Reaktion auf eine unerwartete Unterbrechung des Sortiermischens des ersten Dateneintrags der Metadatenstruktur mit dem zweiten Dateneintrag der Metadatenstruktur, Wiederholen des Sortiermischens des ersten Dateneintrags der Metadatenstruktur mit dem zweiten Dateneintrag der Metadatenstruktur, um ein Duplikat des dritten Dateneintrags zu bilden, wobei eine Referenzzählung, die mit dem dritten Dateneintrag verknüpft ist, unverändert bleibt;
und wobei optional eine erste Referenzzählung, die mit der ersten Erweiterung verknüpft ist, erhöht ist.

13. System nach Anspruch 11, wobei der Uniquifier eine Seitennummer mit einem einzigartigen Wert enthält, der jeder Seite eines Satzes von Seiten in einer ersten Ebene der Metadaten-Datenstruktur zugeordnet ist; und wobei der Uniquifier optional eine erste einzigartige Ebenennummer enthält, die der ersten Ebene mehrerer Ebenen der Metadatenstruktur zugeordnet ist, und wobei eine zweite einzigartige Ebenennummer, die sich von der ersten einzigartigen Ebenennummer unterscheidet, einer zweiten Ebene der mehreren Ebenen zugeordnet ist.

14. System nach Anspruch 11, wobei die Metadatenstruktur mit einem Index verknüpft ist, der die Metadatenstruktur aus mehreren Metadatenstrukturen identifiziert, die einen vollständigen Adressenbereich der LUN darstellen, und wobei der Uniquifier den Index enthält.

15. Verfahren nach Anspruch 11, wobei der Uniquifier eine erste Generierungskennung (ID) enthält, die einer ersten Ebene der mehreren Ebenen der Metadatenstruktur zugewiesen ist, und wobei eine zweite Generierungs-ID, die von der ersten Generierungs-ID erhöht ist, einer zweiten Ebene der mehreren Ebenen zugewiesen ist.

## Revendications

1. Procédé de fonctionnement d'un système de stockage (200) comprenant une mémoire (220) et ayant un réseau de stockage (150) couplé à ce dernier, le réseau de stockage comprenant un ou plusieurs disques statiques à semi-conducteurs (260) (SSD), le système de stockage comprenant une couche de stockage de domaine (350) pour stocker des domaines (470), dans lequel la couche de stockage de domaine est configurée pour dé-dupliquer des domaines ayant des données identiques, le procédé consistant :
à recevoir une demande d'écriture (410) dirigée vers une unité logique (LUN), la demande d'écriture ayant des données (414), une adresse de bloc logique (LBA) et une longueur représentant une première plage d'adresses de l'unité LUN, la demande d'écriture étant traitée au niveau du système de stockage ;
à associer une clé de donnée (618) aux données ;
à stocker la clé de donnée dans une première entrée de données d'une structure de métadonnées (700), la première entrée de données représentant la première plage d'adresses de l'unité LUN, les données étant dé-dupliquées avec un premier domaine stocké sur le réseau de stockage comprenant un ou plusieurs disques statiques à semi-conducteurs ;
à faire fusionner la première entrée de données de la structure de métadonnées avec une deuxième entrée de données de la structure de métadonnées pour former une troisième entrée de données, la deuxième entrée de données représentant une seconde plage d'adresses, la troisième entrée de données représentant une fusion de la première plage d'adresses et de la seconde plage d'adresses, la deuxième entrée de données comprenant la clé de donnée, la deuxième entrée de données étant stockée dans un deuxième domaine sur le réseau de stockage ; et
à stocker la troisième entrée de données dans un troisième domaine sur le réseau de stockage, le troisième domaine comprenant un indicateur unique (720 ; 1700), dans lequel l'indicateur unique comprend une valeur unique qui rend le troisième domaine distinct d'autres domaines, ce qui permet d'éviter une dé-duplication avec le deuxième domaine pendant une opération de reprise de fusion.

2. Procédé selon la revendication 1, consistant en outre :
à la suite d'une interruption inattendue de la fusion de la première entrée de données de la structure de métadonnées avec la deuxième entrée de données de la structure de métadonnées, à répéter la fusion de la première entrée de données de la structure de métadonnées avec la deuxième entrée de données de la structure de métadonnées pour former un double de la troisième entrée de données, dans lequel un compte de référence (1540) associé à la troisième entrée de données reste inchangé.

3. Procédé selon la revendication 1, dans lequel le deuxième domaine est supprimé.

4. Procédé selon la revendication 2, dans lequel un premier compte de référence associé au premier domaine est augmenté.

5. Procédé selon la revendication 1, dans lequel l'indicateur unique comprend un numéro de page (1710) ayant une valeur unique attribuée à chaque page d'un ensemble de pages dans un premier niveau de la structure de données de métadonnées.

6. Procédé selon la revendication 5, dans lequel l'indicateur unique comprend un premier numéro de niveau unique (1720) attribué au premier niveau d'une pluralité de niveaux de la structure de métadonnées et dans lequel un second numéro de niveau unique, différent du premier numéro de niveau unique, est attribué à un second niveau de la pluralité de niveaux.

7. Procédé selon la revendication 6, dans lequel l'identificateur comprend un identifiant universellement unique (1750) associé à l'unité LUN.

8. Procédé selon la revendication 1, dans lequel la structure de métadonnées est associée à un indice identifiant la structure de métadonnées parmi une pluralité de structures de métadonnées représentant toute une plage d'adresses de l'unité LUN et dans lequel l'indicateur unique comprend l'indice (1730).

9. Procédé selon la revendication 1, dans lequel la fusion de la première entrée de données de la structure de métadonnées avec la deuxième entrée de données de la structure de métadonnées pour former la troisième entrée de données est réalisée sans enregistrement significatif d'informations d'état.

10. Procédé selon la revendication 1, dans lequel le troisième domaine comprend un indicateur unique ayant un premier identifiant (ID) de génération (1740), attribué à un premier niveau d'une pluralité de niveaux de la structure de métadonnées et dans lequel un second identifiant (ID) de génération incrémenté du premier identifiant (ID) de génération est attribué à un second niveau de la pluralité de niveaux.

11. Système comprenant :
un système de stockage ayant une mémoire raccordée à un processeur par le biais d'un bus ;
un réseau de stockage couplé au système de stockage et ayant un ou plusieurs disques statiques à semi-conducteurs (SSD) ;
une pile d'entrée/de sortie (I/O) de stockage s'exécutant sur le processeur du système de stockage, la pile d'entrée/de sortie de stockage comprenant une couche de stockage de domaine pour stocker des domaines, la couche de stockage de domaine étant configurée pour dé-dupliquer des domaines ayant des données identiques, la pile d'entrée/de sortie de stockage, lorsqu'elle est exécutée, pouvant :
recevoir une demande d'écriture dirigée vers une unité logique (LUN), la demande d'écriture ayant des données, une adresse de bloc logique (LBA) et une longueur représentant une première plage d'adresses de l'unité LUN ;
associer une clé de donnée aux données ;
stocker la clé de donnée dans une première entrée de données d'une structure de métadonnées, la première entrée de données représentant la première plage d'adresses de l'unité LUN, les données étant dé-dupliquées avec un premier domaine stocké sur le réseau de stockage ;
faire fusionner la première entrée de données de la structure de métadonnées avec une deuxième entrée de données de la structure de métadonnées pour former une troisième entrée de données, la deuxième entrée de données représentant une seconde plage d'adresses, la troisième entrée de données représentant une fusion de la première plage d'adresses et de la seconde plage d'adresses, la deuxième entrée de données comprenant la clé de donnée, la deuxième entrée de données étant stockée dans un deuxième domaine sur le réseau de stockage ; et
stocker la troisième entrée de données dans un troisième domaine sur le réseau de stockage, le troisième domaine comprenant un indicateur unique, dans lequel l'indicateur unique comprend une valeur unique qui rend le troisième domaine distinct d'autres domaines, ce qui permet d'éviter une dé-duplication avec le deuxième domaine pendant une opération de reprise de fusion.

12. Système selon la revendication 11, dans lequel la pile d'entrée/de sortie de stockage est en outre utilisée :
à la suite d'une interruption inattendue de la fusion de la première entrée de données de la structure de métadonnées avec la deuxième entrée de données de la structure de métadonnées, pour répéter la fusion de la première entrée de données de la structure de métadonnées avec la deuxième entrée de données de la structure de métadonnées pour former un double de la troisième entrée de données, dans lequel un compte de référence associé à la troisième entrée de données reste inchangé ;
et, facultativement, dans lequel un premier compte de référence associé au premier domaine est augmenté.

13. Système selon la revendication 11, dans lequel l'indicateur unique comprend un numéro de page ayant une valeur unique attribuée à chaque page d'un ensemble de pages dans un premier niveau de la structure de données de métadonnées ; et, facultativement, dans lequel l'indicateur unique comprend un premier numéro de niveau unique attribué au premier niveau d'une pluralité de niveaux de la structure de métadonnées et dans lequel un second numéro de niveau unique, différent du premier numéro de niveau unique, est attribué à un second niveau de la pluralité de niveaux.

14. Système selon la revendication 11, dans lequel la structure de métadonnées est associée à un indice identifiant la structure de métadonnées parmi une pluralité de structures de métadonnées représentant toute une plage d'adresses de l'unité LUN et dans lequel l'indicateur unique comprend l'indice.

15. Système selon la revendication 11, dans lequel l'indicateur unique comprend un identifiant (ID) de génération, attribué à un premier niveau d'une pluralité de niveaux de la structure de métadonnées et dans lequel un second identifiant de génération incrémenté du premier identifiant de génération est attribué à un second niveau de la pluralité de niveaux.
